# EUROPEAN PATENT APPLICATION

(11) **EP 4 730 508 A1**
(43) Date of publication of application: **22.04.2026**
(21) Application number: 25202547.3
(22) Date of filing: 16.09.2025
(51) Int. Cl.: H01M 50/207, H01M 50/244, H01M 50/247, H01M 50/262, H01M 50/284, H01M 50/296, H01M 50/519, H01M 50/591, H01M 50/593, H01M 50/213

(54) **BATTERY PACK**

(30) Priority: 19.09.2024 JP 2024162019
(71) Applicant: Makita Corporation, Anjo-shi Aichi 446-8502 (JP)
(72) Inventor: TANAKA, Kazuya, Anjo-shi, Aichi, 446-8502 (JP)
(74) Representative: Kramer Barske Schmidtchen Patentanwälte PartG mbB

(57) **Abstract**

Problem

To provide techniques that are capable of making the external dimensions of an outer case of a battery pack more compact.

Solution

A battery pack (4) is mountable on an electronic device (16) or a charger (6), which each have a terminal-mounting surface (10; 20), by sliding the battery pack in a first direction (D1) that is parallel to the terminal-mounting surface. The battery pack comprises a plurality of battery-side terminals (12) and an outer case (24). Assuming that a direction that is orthogonal to the first direction and is the direction from the battery pack toward the terminal-mounting surface is defined as a second direction (D2), the outer case comprises: a first wall (88) that is disposed in the first direction relative to the battery-side terminals; a second wall (84) that is disposed in the second direction relative the battery-side terminals, and connects to the first wall; and a plurality of slits (90a, 90b, 90c, 90d, 90e), which pass through portions of the first wall and the second wall. The first wall has: first flat-wall portions (92); and second flat-wall portions (96) that are adjacent to the first flat-wall portions in a third direction (D3) that is orthogonal to both the first direction and the second direction. The second flat-wall portions are offset from the first flat-wall portions in a fourth direction (D4) that is opposite the first direction.

## Description

### TECHNICAL FIELD

The techniques disclosed in the present specification relate to a battery pack, e.g., for use with a power tool.

### BACKGROUND ART

WO 2015/179318 describes a battery pack that can be mounted on an electronic device or a charger, which each have a terminal-mounting surface from which sheet-shaped, device-side terminals protrude, by sliding the battery pack in a first direction parallel to the terminal-mounting surface. The battery pack comprises: battery cells; a plurality of battery-side terminals, which respectively electrically connect to the device-side terminals by pinching the device-side terminals in a direction orthogonal to the first direction; a circuit board electrically connected to both the battery cells and the plurality of battery-side terminals; and an outer case, which houses the battery cells, the circuit board, and the plurality of battery-side terminals. Assuming that a direction that is orthogonal to the first direction and is the direction from the battery pack toward the terminal-mounting surface of the charger or battery pack is defined as a second direction, the outer case comprises: a first wall that is disposed in the first direction as viewed from the plurality of battery-side terminals; a second wall that is disposed in the second direction as viewed from the plurality of battery-side terminals and connects to the first wall; and a plurality of slits, each of which is formed spanning the first wall and the second wall and which respectively receive the device-side terminals in the interior of the outer case.

### SUMMARY OF THE INVENTION

If the external dimensions of the outer case of a battery pack are made more compact, various advantages would result. For example, if the external dimensions of the outer case are made more compact, then there would be more degrees of freedom for designing the shape of the device on which the battery pack is to be mounted (e.g., an electronic device or charger). For example, at the periphery of a terminal disposition portion (i.e., the portion at (in) which the battery-side terminals are disposed), the external dimensions of the outer case can be made more compact, thereby providing additional degrees of freedom for designing the shape of the battery-side terminals (and/or the device-side terminals), which has the advantage that it becomes easier to mold the various components and ensure sufficient space for electrical insulation. It is therefore one non-limiting object of the present teachings to disclose techniques for making the external dimensions of the outer case of a battery pack more compact.

This object is achieved by the battery pack of claim 1. Further developments of the invention are recited in the dependent claims.

In one non-limiting aspect of the present teachings, a battery pack can be mounted on an electronic device or a charger, which each have a terminal-mounting surface from which sheet-shaped (rib-shaped, fin-shaped), device-side terminals protrude (preferably perpendicular to the terminal-mounting surface), by sliding the battery pack in a first direction that is parallel to the terminal-mounting surface. The battery pack may comprise: one or more battery cells; a plurality of battery-side terminals, which respectively electrically connect to the device-side terminals by (elastically) pinching (clamping, squeezing) the device-side terminals in a direction orthogonal to the first direction (e.g., in the below-described third direction); a circuit board electrically connected to both the battery cell(s) and the plurality of battery-side terminals; and an outer case, which houses the battery cell(s), the circuit board, and the plurality of battery-side terminals. Assuming that a direction that is orthogonal to the first direction and is the direction from the battery pack toward the terminal-mounting surface of the electronic device or charger (when the battery pack is mounted on the electronic device or charger) is defined as a second direction, the outer case comprises: a first wall that is disposed (extends) in the first direction as viewed from (relative to) the plurality of battery-side terminals (i.e. the first wall is spaced apart from the battery-side terminals in the first direction); a second wall that is disposed (extends) in the second direction as viewed from (relative to) the plurality of battery-side terminals (i.e. the second wall is spaced apart from the battery-side terminals in the second direction) and connects to the first wall (a planar surface of the second wall preferably extends perpendicular, or at least substantially perpendicular to a planar surface of the first wall); and a plurality of slits, which are formed spanning the first wall and the second wall (i.e. the slits pass (penetrate) through portions of both of the first wall and the second wall) and respectively receive the device-side terminals in the interior of the outer case. The first wall has: first flat-wall portions, in (between) which is formed a first slit group that includes at least one of the plurality of slits; and second flat-wall portions, which are adjacent to the first flat-wall portion in a third direction that is orthogonal to both the first direction and the second direction and in (between) which is formed a second slit group that includes at least (another) one of the plurality of slits. The second flat-wall portions are offset (displaced) from the first flat-wall portions in a fourth direction that is opposite to the first direction (i.e. the first flat-wall portions are disposed (extend) farther in the first direction than the second flat-wall portions or alternatively stated, the second flat-wall portions are disposed (extend) farther in the fourth direction than the first flat-wall portions).

Hypothetically speaking, if the first wall were to instead be flush (i.e. if the first flat-wall portions were to be flush with the second-flat wall portions, such that surfaces of both the first flat-wall portions and the second flat-wall portions extend in a common plane defined by the second and third directions), an empty space might be created in the battery pack such that the empty space extends from a portion (segment) of the first wall in the fourth direction (that is, in the direction in which the inner surface of the first wall faces). On the other hand, in the above-described configuration according to the present teachings, a portion (segment) of the first wall (in particular, the second flat-wall portions thereof) can be offset (displaced, shifted) in the fourth direction (that is, in the direction in which the inner surface of the first wall faces) relative to the first flat-wall portions so as to reduce or even eliminate this empty space. As a result, the external dimensions of the outer case can be made more compact by the amount that the empty space is reduced, compared with an embodiment in which the first wall is flush (i.e. the first wall is planar across the entire first wall).

### BRIEF DESCRIPTION OF THE DRAWINGS

FIG. 1 shows a charging system 2 according to a working example of the present teachings, in a state in which a battery pack 4 has been removed from a charger 6.
FIG. 2 shows the charging system 2 according to the working example, in a state in which the battery pack 4 has been mounted on the charger 6.
FIG. 3 shows a power tool system according to the working example, in a state in which the battery pack 4 has been removed from an electric work machine 16.
FIG. 4 shows the power tool system according to the working example, in a state in which the battery pack 4 has been mounted on the electric work machine 16.
FIG. 5 is an exploded view of the battery pack 4 according to the working example.
FIG. 6 shows a battery module 22 of the battery pack 4 according to the working example as viewed from the front, above, and right.
FIG. 7 shows the battery module 22 of the battery pack 4 according to the working example as viewed from the rear, below, and left.
FIG. 8 is an oblique view of a battery-side terminal 12 of the battery pack 4 according to the working example.
FIG. 9 shows the battery module 22 of the battery pack 4 according to the working example as viewed from above.
FIG. 10 shows an upper-part case 26 of the battery pack 4 according to the working example as viewed from the rear, above, and right.
FIG. 11 shows the battery pack 4 according to the working example as viewed from above.
FIG. 12 shows the upper-part case 26 of the battery pack 4 according to the working example as viewed from the front, below, and right.
FIG. 13 is an exploded view of the charger 6 according to the working example.
FIG. 14 shows a cross section, orthogonal to the front-rear direction, of the charger 6 according to the working example as viewed from the rear.
FIG. 15 is an enlarged view of area EA indicated in FIG. 14.
FIG. 16 is an oblique view of a connection terminal 228 of the charger 6 according to the working example.
FIG. 17 shows an upper surface of the charger 6 according to the working example as viewed along (from) a direction orthogonal to a terminal-mounting surface 10 (i.e., in second direction D2).
FIG. 18 shows battery-side terminals 12 and device-side terminals 8 respectively engaging with each other during the process of mounting the battery pack 4 on the charger 6 according to the working example.
FIG. 19 shows the positional relationship between the battery-side terminals 12 and the device-side terminals 8 when the battery pack 4 has been mounted on the charger 6 according to the working example.
FIG. 20 schematically shows an electrical circuit formed between the battery pack 4 and the charger 6 when the battery pack 4 has been mounted on the charger 6 according to the working example.
FIG. 21 shows the positional relationship between the battery-side terminal 12 and device-side terminals 18 when the battery pack 4 has been mounted on the electric work machine 16 according to the working example.
FIG. 22 schematically shows an electrical circuit formed between the battery pack 4 and the electric work machine 16 when the battery pack 4 has been mounted on the electric work machine 16 according to the working example.

### DETAILED DESCRIPTION OF THE INVENTION

Representative, non-limiting specific examples of the present invention are described below in detail, with reference to the drawings. This detailed description is merely intended to teach persons skilled in the art details for implementing preferable examples of the present invention and are not intended to limit the scope of the present invention. In addition, the additional features and inventions disclosed herein can also be used separately from, or in conjunction with, other features and inventions to provide additional improved battery packs and methods of manufacturing and using the same.

In addition, the combinations of features and processes disclosed in the detailed description below are not essential when implementing the present invention in the broadest possible sense and are described only for the purpose of explaining representative specific examples of the present invention in detail. Moreover, when providing additional, useful embodiments of the present teachings, various features of the following representative specific examples, as well as the various features set forth in the claims, need not accord with the specific examples described herein nor be combined in the order enumerated.

Separately from the configurations of the features described in the working example and/or the claims, all the features described in the present specification and/or in the claims are intended to be disclosed individually and mutually independently as limitations on the specific matters recited in the disclosure and the claims of the original application. Moreover, the descriptions relating to all numerical ranges and groupings or categories are intended to disclose all intermediate configurations as possible limitations of the specific matters recited in the disclosure and the claims of the original application.

In one or more embodiments, the plurality of battery-side terminals may include: a positive-electrode terminal and a negative-electrode terminal for discharging (conducting current) from the battery cell(s) to the electronic device or for charging (conducting current) from the charger to the battery cell(s); a discharging-signal (discharge-signal or discharge-authorization signal) terminal for signal communication (conducting electrical signals) between the electronic device and the circuit board; and one or more charging-signal (charge-signal or charging-authorization signal) terminals for signal communication (conducting electrical signals) between the charger and the circuit board. The positive-electrode terminal, the negative-electrode terminal, the discharging-signal terminal, and the charging-signal terminal(s) may be disposed spaced apart from each other in the third direction. The plurality of slits may include: a positive-electrode slit, which receives (is adapted/configured to receive) the device-side terminal corresponding to the positive-electrode terminal (of the battery pack); a negative-electrode slit, which receives (is adapted/configured to receive) the device-side terminal corresponding to the negative-electrode terminal (of the battery pack); a discharging-signal slit, which receives (is adapted/configured to receive) the device-side terminal corresponding to the discharging-signal terminal (of the battery pack); and one or more charging-signal slits, which receive(s) (is/are adapted/configured to receive) the device-side terminal(s) corresponding to the charging-signal terminal(s) (of the battery pack).

According to the above-mentioned configuration, because one slit is provided for each type of battery-side terminal, the number of slits provided in the outer case becomes larger. Because the external dimensions of the outer case tend to increase to the extent that the number of slits becomes larger, the effect of making the external dimensions of the outer case more compact due to offsetting a portion of the first wall in the fourth direction relative to the first flat-wall portion is remarkably exhibited.

In one or more embodiments, the first slit group may include at least one of the positive-electrode slit, the negative-electrode slit, and the discharging-signal slit. The second slit group may include the charging-signal slit(s).

The size of the charging-signal terminal(s), through which a large electrical current does not flow, is sometimes designed to be smaller than the size of the positive-electrode terminal (and/or the negative-electrode terminal), through which a large electrical current for charging (of the battery cell(s)) or discharging (for driving electronic components of the electronic device) flows. In this embodiment, although no empty space is created in the vicinity of the portion(s) of the first wall that oppose(s) (face(s)) the positive-electrode terminal and/or the negative-electrode terminal (because these terminals are relatively large), an empty space might be created in the vicinity of the portion of the first wall that opposes (faces) the charging-signal terminal(s) (because the charging-signal terminal(s) may be significantly smaller than the positive- and negative-electrode terminals). However, according to the above-mentioned configuration, the second flat-wall portions (i.e., the portions of the first wall that oppose (face) the charging-signal terminal(s)), in which the charging-signal slit(s) is (are) formed, is offset in the fourth direction (i.e., the direction in which an inner surface of the first wall faces) relative to the first flat-wall portions (between which at least the positive-electrode slit and the negative-electrode slit are formed) so as to reduce the empty space in the vicinity of (i.e. in the fourth direction relative to) the second flat-wall portions. The external dimensions of the outer case can thereby be made more compact to the extent that such an empty space is reduced.

In one or more embodiments, the charging-signal terminal(s) may include: a first charging-signal terminal; and a second charging-signal terminal that is offset (spaced apart) from the first charging-signal terminal in the third direction. The charging-signal slit(s) may include: a first charging-signal slit, which receives (is adapted/configured to receive) the device-side terminal corresponding to the first charging-signal terminal (of the battery pack); and a second charging-signal slit, which receives (is adapted/configured to receive) the device-side terminal corresponding to the second charging-signal terminal (of the battery pack).

According to the above-mentioned configuration, a plurality of communication paths, which include the (first) communication path via the first charging-signal terminal and the (second) communication path via the second charging-signal terminal, can be established between the charger and the circuit board (of the battery pack).

In one or more embodiments, the plurality of battery-side terminals may include: a reference terminal located in the fourth direction as viewed from (relative to) the first flat-wall portions (i.e. the reference terminal is spaced apart from the first flat-wall portions in the fourth direction); and one or more offset terminals located in the fourth direction as viewed from (relative to) the second flat-wall portions (i.e. the offset terminal(s) is (are) spaced apart from the second flat-wall portions in the fourth direction). The location of the end portion(s) (end(s), edge(s)) of the offset terminal(s) in the first direction may be offset (displaced, shifted) in the fourth direction relative to the location of the end portion of the reference terminal in the first direction (i.e. the end(s) of the offset terminal(s) in the first direction is (are) disposed farther in the fourth direction than the end of the reference terminal in the first direction).

According to the above-mentioned configuration, a space is formed in the first direction, as viewed from (relative to) the offset terminal(s), to the extent that the offset terminal(s) is (are) offset in the fourth direction relative to the reference terminal. In addition, the second flat-wall portions are offset in the fourth direction such that the second flat-wall portions are disposed in this space. The external dimensions of the outer case can thereby be made more compact.

In one or more embodiments, the reference terminal may function as (be) any one of: the positive-electrode terminal for discharging (conducting current) from the battery cell to the electronic device or (and) charging (conducting current) from the charger to the battery cell; the negative-electrode terminal for discharging (conducting current) from the battery cell to the electronic device or charging (conducting current) from the charger to the battery cell; and the discharging-signal terminal for signal communication (conducting electric signals) between the electronic device and the circuit board. The offset terminal(s) may function as the charging-signal terminal(s) for signal communication (conducting electric signals) between the charger and the circuit board.

As was explained above, the size of the charging-signal terminal(s), through which a large electrical current does not flow, is sometimes designed to be smaller than the size of the positive-electrode terminal (and/or the negative-electrode terminal), through which a large electrical current for charging or discharging flows. According to the above-mentioned configuration, it is possible to dispose the larger-sized, positive-electrode terminal (and/or the larger-sized, negative-electrode terminal) in the space in the fourth direction as viewed from (relative to) the first flat-wall portions (i.e., in a comparatively large space), and to dispose the smaller-sized, battery-side, charging-signal terminal(s) in the space in the fourth direction as viewed from (relative to) the second flat-wall portions (i.e., in a relatively small space). It is thereby possible to keep electrical components from being densely or sparsely disposed in the interior of the outer case.

Another battery pack disclosed herein is a battery pack that can be mounted on the electronic device or the charger, which each have the terminal-mounting surface from which sheet-shaped (rib-shaped, fin-shaped), device-side terminals protrude (preferably perpendicular to the terminal-mounting surface), by sliding the battery pack in the first direction, which is parallel to the terminal-mounting surface. The battery pack may comprise: the battery cell(s); the plurality of battery-side terminals, which respectively electrically connect to the device-side terminals by (elastically) pinching (clamping, squeezing) the device-side terminals in a direction orthogonal to the first direction (e.g., in the below-described third direction); the circuit board electrically connected to both the battery cell(s) and the plurality of battery-side terminals; and the outer case, which houses the battery cell(s), the circuit board, and the plurality of battery-side terminals. The outer case may have the plurality of slits, which are formed in the outer surface of the outer case and respectively receive (are adapted/configured to receive) the device-side terminals in the interior of the outer case. The plurality of battery-side terminals may include: the positive-electrode terminal and the negative-electrode terminal for discharging (conducting current) from the battery cell to the electronic device or (and) charging (conducting current) from the charger to the battery cell; the discharging-signal terminal for signal communication (conducting electric signals) between the electronic device and the circuit board; and the charging-signal terminal(s) for signal communication (conducting electric signals) between the charger and the circuit board. Assuming that a direction that is orthogonal to the first direction and is the direction from the battery pack toward the terminal-mounting surface of the electronic device or charger (when the battery pack is mounted on the electronic device or charger) is defined as the second direction, the positive-electrode terminal, the negative-electrode terminal, the discharging-signal terminal, and the charging-signal terminal(s) may be disposed spaced apart from each other in the third direction, which is orthogonal to both the first direction and the second direction. The location of the end portion (end, edge) of the positive-electrode terminal in the first direction and the location of the end portion (end, edge) of the negative-electrode terminal in the first direction may be aligned with each other in the first direction (i.e. a straight line extending in the third direction intersects both the end of the positive-electrode terminal in the first direction and the end of the negative-electrode terminal in the first direction). At least one of the location of the end portion (end, edge) of the discharging-signal terminal in the first direction and the location of the end portion (end, edge) of the charging-signal terminal(s) in the first direction may be offset (spaced apart) in the fourth direction, which is opposite the first direction, relative to the location of the end portion (end, edge) of the positive-electrode terminal in the first direction and the location of the end portion (end, edge) of the negative-electrode terminal in the first direction.

According to the above-mentioned configuration, the location of the end portion (end, edge) of the discharging-signal terminal in the first direction and/or the location of the end portion(s) (end(s), edge(s)) of the charging-signal terminal(s) in the first direction is (are) offset in the fourth direction relative to the locations of the end portions (ends, edges) of the positive-electrode terminal and the negative-electrode terminal in the first direction. It is thereby possible to form a space in the first direction as viewed from (relative to) the discharging-signal terminal and/or the charging-signal terminal(s). It is possible, for example, to dispose electrical components, dispose wires connecting electrical components, and/or dispose one portion of the outer case in this space, whereby the battery pack can be made more compact.

In one or more embodiments, the location of the end portion (end, edge) of the positive-electrode terminal in the first direction, the location of the end portion (end, edge) of the negative-electrode terminal in the first direction, and the location of the end portion (end, edge) of the discharging-signal terminal in the first direction may be aligned with each other in the first direction (i.e. a straight line extending in the third direction intersects each of the end of the positive-electrode terminal in the first direction, the end of the negative-electrode terminal in the first direction and the end of the discharging-signal terminal in the first direction). The location of the end portion(s) (end(s), edge(s)) of the charging-signal terminal(s) in the first direction may be offset (spaced apart) in the fourth direction relative to each of the location of the end portion (end, edge) of the positive-electrode terminal in the first direction, the location of the end portion (end, edge) of the negative-electrode terminal in the first direction, and the location of the end portion (end, edge) of the discharging-signal terminal in the first direction (i.e. the end(s) of the charging-signal terminal(s) in the first direction is (are) preferably spaced apart in the fourth direction from the above-noted straight line that extends in the third direction and intersects each of the end of the positive-electrode terminal in the first direction, the end of the negative-electrode terminal in the first direction and the end of the discharging-signal terminal in the first direction).

According to the above-mentioned configuration, the location of the end portion(s) (end(s), edge(s)) of the charging-signal terminal(s) in the first direction is offset (spaced apart) in the fourth direction relative to the locations of the end portions (ends, edges) of the positive-electrode terminal, the negative-electrode terminal, and the discharging-signal terminal in the first direction. It is thereby possible to form a space in the first direction as viewed from (relative to) the charging-signal terminal(s). It is possible, for example, to dispose electrical components, dispose wires connecting electrical components, or dispose one portion of the outer case in this space, whereby the battery pack can be made more compact.

In one or more embodiments, the charging-signal terminal(s) may include: the first charging-signal terminal; and the second charging-signal terminal that is offset (spaced apart) from the first charging-signal terminal in the third direction. The location of the end portion (end, edge) of the first charging-signal terminal in the first direction and the location of the end portion (end, edge) of the second charging-signal terminal in the first direction may be aligned with each other in the first direction (i.e. a straight line extending in the third direction intersects both the end of the first charging-signal terminal in the first direction and the end of the second charging-signal terminal in the first direction).

According to the above-mentioned configuration, a plurality of communication paths, which include the communication path via the first charging-signal terminal and the communication path via the second charging-signal terminal, can be established between the charger and the circuit board.

In another aspect of the present teachings, a charging system may include: a charger having a terminal-mounting surface from which sheet-shaped, device-side terminals (rib-shaped, fin-shaped) protrude (preferably perpendicular to the terminal-mounting surface); and a battery pack (e.g., any one of the above- or below-described battery packs), which is mounted on the charger by sliding the battery pack in the first direction parallel to the terminal-mounting surface. The battery pack comprises: the battery cell(s); the plurality of battery-side terminals, which respectively electrically connect to the device-side terminals by pinching (clamping, squeezing) the device-side terminals in a direction orthogonal to the first direction (e.g., in the below-described third direction); the circuit board electrically connected to both the battery cell(s) and the plurality of battery-side terminals; and the outer case, which houses the battery cell(s), the circuit board, and the plurality of battery-side terminals. Assuming that a direction that is orthogonal to the first direction and is the direction from the battery pack toward the terminal-mounting surface of the charger (when the battery pack is mounted on the charger) is defined as the second direction, the outer case may comprise: the first wall, which is disposed in the first direction as viewed from (relative to) the plurality of battery-side terminals (i.e. the first wall is spaced apart from the battery-side terminals in the first direction); a second wall, which is disposed in the second direction as viewed from (relative to) the plurality of battery-side terminals (i.e. the second wall is spaced apart from the battery-side terminals in the second direction) and connects to the first wall; and the plurality of slits, which are formed spanning the first wall and the second wall (i.e. the slits pass (penetrate) through portions of both of the first wall and the second wall) and respectively receive the device-side terminals in the interior of the outer case. The plurality of battery-side terminals may include: the positive-electrode terminal and the negative-electrode terminal for discharging (conducting current) from the battery cell to a electronic device or charging (conducting current) from the charger to the battery cell; the discharging-signal terminal for signal communication (conducting electric signals) between the electronic device and the circuit board; and the charging-signal terminal(s) for signal communication (conducting electric signals) between the charger and the circuit board. The positive-electrode terminal, the negative-electrode terminal, the discharging-signal terminal, and the charging-signal terminal(s) may be disposed spaced apart from each other in the third direction, which is orthogonal to both the first direction and the second direction. The plurality of slits may include: the positive-electrode slit, which receives (is adapted/configured to receive) the device-side terminal corresponding to the positive-electrode terminal; the negative-electrode slit, which receives (is adapted/configured to receive) the device-side terminal corresponding to the negative-electrode terminal; the discharging-signal slit, which receives (is adapted/configured to receive) the device-side terminal of the electronic device corresponding to the discharging-signal terminal; and the charging-signal slit(s), which receive(s) (is/are adapted/configured to receive) the device-side terminal(s) corresponding to the charging-signal terminal(s). The outer case may further have one or more mating recessed portions, which is (are) formed by recessing the second wall around the discharging-signal slit. The charger may further have one or more (corresponding) mating protruding portions, which (respectively) mate(s) with (contacts) the mating recessed portion(s) when the battery pack is mounted on the charger.

According to the above-described configuration, when the battery pack is mounted on the charger, the device-side terminals of the charger respectively enter into the positive-electrode slit, the negative-electrode slit, and the charging-signal slit(s), thereby at least partially blocking off the positive-electrode slit, the negative-electrode slit, and the charging-signal slit(s). The ingress of foreign matter (e.g., dust) into the interior of the outer case via the positive-electrode slit, the negative-electrode slit, and the charging-signal slit(s) is thereby impeded and curtailed. Furthermore, according to the above-described configuration, the mating protruding portion (or one of the mating protruding portions) of the charger at least partially blocks off the discharging-signal slit by mating with the mating recessed portion thereof. The ingress of foreign matter (e.g., dust) into the interior of the outer case via the discharging-signal slit is thereby impeded and curtailed.

In one or more embodiments, the mating protruding portion (or one of the mating protruding portions) may be disposed so as not to contact the device-side terminals on the terminal-mounting surface.

Hypothetically speaking, if the mating protruding portion (or one of the mating protruding portions) were instead to be disposed so as to contact the device-side terminals, then the presence of the mating protruding portion would become difficult for the user to perceive. If the user does not perceive the presence of the mating protruding portion, then there is a possibility that the user might attempt to mount a battery pack, which is incapable of avoiding the mating protruding portion (i.e., a battery pack not having the corresponding mating recessed portion), on the charger. In this situation, because the mating protruding portion interferes with (blocks) the battery pack, the battery pack cannot be mounted on the charger, which might cause annoyance to the user if the user was not previously aware that the battery pack can not be mounted on the charger (e.g., because the charger is not configured to suitably charge the battery pack). On the other hand, according to the above-described configuration of the present teachings, by disposing the mating protruding portion such that the mating protruding portion and the device-side terminals do not contact each other, the presence of the mating protruding portion becomes easier for the user to perceive. As such, the user can perceive the presence of the mating protruding portion even without attempting to mount a battery pack, which is incapable of avoiding the mating protruding portion (i.e., a battery pack not having the corresponding mating recessed portion), on the charger. It is thereby possible to curtail feelings of annoyance by the user.

Another battery pack disclosed herein is a battery pack that can be mounted on the electronic device or the charger, which each have the terminal-mounting surface from which sheet-shaped (rib-shaped, fin-shaped), device-side terminals protrude (preferably perpendicular to the terminal-mounting surface), by sliding the battery pack in the first direction, which is parallel to the terminal-mounting surface. The battery pack may comprise: the battery cell(s); the plurality of battery-side terminals, which respectively electrically connect to the device-side terminals by pinching (clamping, squeezing) the device-side terminals in a direction orthogonal to the first direction (e.g., in the below-described third direction); the circuit board electrically connected to both the battery cell(s) and the plurality of battery-side terminals; and the outer case, which houses the battery cell(s), the circuit board, and the plurality of battery-side terminals. Assuming that a direction that is orthogonal to the first direction and is the direction from the battery pack toward the terminal-mounting surface of the electronic device or charger (when the battery pack is mounted on the electronic device or charger) is defined as the second direction, the outer case may comprise: the first wall, which is disposed in the first direction as viewed from (relative to) the plurality of battery-side terminals (i.e. the first wall is spaced apart from the battery-side terminals in the first direction); a second wall that is disposed in the second direction as viewed from (relative to) the plurality of battery-side terminals (i.e. the second wall is spaced apart from the battery-side terminals in the second direction) and connects to the first wall; and the plurality of slits, which are formed spanning the first wall and the second wall (i.e. the slits pass (penetrate) through portions of both of the first wall and the second wall) and respectively receive the device-side terminals in the interior of the outer case. The plurality of battery-side terminals may include: the positive-electrode terminal and the negative-electrode terminal for discharging (conducting current) from the battery cell to the electronic device or charging (conducting current) from the charger to the battery cell; the discharging-signal terminal for signal communication (conducting electric signals) between the electronic device and the circuit board; and the charging-signal terminal(s) for signal communication (conducting electric signals) between the charger and the circuit board. The positive-electrode terminal, the negative-electrode terminal, the discharging-signal terminal, and the charging-signal terminal(s) may be disposed spaced apart from each other in the third direction, which is orthogonal to both the first direction and the second direction. The plurality of slits may include: the positive-electrode slit, which receives (is adapted/configured to receive) the device-side terminal corresponding to the positive-electrode terminal; the negative-electrode slit, which receives (is adapted/configured to receive) the device-side terminal corresponding to the negative-electrode terminal; the discharging-signal slit, which receives (is adapted/configured to receive) the device-side terminal corresponding to the discharging-signal terminal; and the charging-signal slit(s), which receive(s) (is/are adapted/configured to receive) the device-side terminal(s) corresponding to the charging-signal terminal(s). The outer case may further have a recessed portion formed by recessing the second wall around the discharging-signal slit.

According to the above-described configuration, even if the device on which the battery pack is to be mounted (i.e., the electronic device or charger) has the above-mentioned protruding portion at a location corresponding to the discharging-signal slit of the battery pack, that protruding portion is received by (accommodated in) the recessed portion of the battery pack when the battery pack is mounted on the charger. Consequently, it is possible to avoid interference of the protruding portion (of the charger) with the battery pack. Furthermore, in the state in which the protruding portion of the charger has been received in the recessed portion of the battery pack, at least a portion of the discharging-signal slit is blocked off by the protruding portion. The ingress of foreign matter (e.g., dust) into the interior of the outer case via the discharging-signal slit is thereby impeded and curtailed.

Another battery pack disclosed herein is a battery pack that can be mounted on the electronic device or the charger, which each have the terminal-mounting surface from which sheet-shaped (rib-shaped, fin-shaped), device-side terminals protrude (preferably perpendicular to the terminal-mounting surface), by sliding the battery pack in the first direction, which is parallel to the terminal-mounting surface. The battery pack may comprise: the battery cell(s); the plurality of battery-side terminals, which respectively electrically connect to the device-side terminals by pinching (clamping, squeezing) the device-side terminals in a direction orthogonal to the first direction (e.g., in the below-described third direction); the circuit board electrically connected to both the battery cell(s) and the plurality of battery-side terminals; and the outer case, which houses the battery cell(s), the circuit board, and the plurality of battery-side terminals. The outer case may have the plurality of slits, which are formed in an outer surface of the outer case and respectively receives the device-side terminals in the interior of the outer case. Assuming that a direction that is orthogonal to the first direction and is the direction from the battery pack toward the terminal-mounting surface of the electronic device or charger (when the battery pack is mounted on the electronic device or charger) is defined as the second direction, the plurality of battery-side terminals may include: a first terminal disposed along a first virtual axis parallel to the first direction; a second terminal disposed along a second virtual axis, which is parallel to the first direction and offset by a first distance from the first virtual axis in the third direction that is orthogonal to both the first direction and the second direction; a third terminal disposed along a third virtual axis, which is parallel to the first direction and offset by a second distance from the second virtual axis in the third direction; a fourth terminal disposed along a fourth virtual axis, which is parallel to the first direction and offset by a third distance from the third virtual axis in the third direction; and a fifth terminal disposed along a fifth virtual axis, which is parallel to the first direction and is offset by a fourth distance from the fourth virtual axis in the third direction. The first distance, the third distance, and the fourth distance may be equal to each other. The second distance may be greater than each of the first distance, the third distance, and the fourth distance.

In previously existing battery packs, the battery-side terminals are disposed equispaced from each other in the third direction. On the other hand, according to the above-mentioned configuration, the second distance (i.e., the spacing between the second terminal and the third terminal) is greater than each of the first distance, the third distance, and the fourth distance (i.e., the spacings between the other terminals). It is thereby possible to form a larger space between the second terminal and the third terminal. Therefore, it is possible, for example, to dispose a large electrical component or dispose multiple electrical components in this space, whereby the battery pack can be made more compact.

In one or more embodiments, the second distance may be equal to or greater than two times each of the first distance, the third distance, and the fourth distance.

According to the above-mentioned configuration, a larger space can be ensured between the second terminal and the third terminal. Therefore, it is possible, for example, to dispose a large electrical component or dispose multiple electrical components in this space.

In one or more embodiments, the first terminal may function as (be) the positive-electrode terminal for discharging (conducting current) from the battery cell to the electronic device or charging (conducting current) from the charger to the battery cell. The second terminal may function as (be) the discharging-signal terminal for signal communication (conducting electric signals) between the electronic device and the circuit board. The third terminal and the fourth terminal may function as (be) the charging-signal terminals for signal communication (conducting electric signals) between the charger and the circuit board. The fifth terminal may function as (be) the negative-electrode terminal for discharging (conducting current) from the battery cell to the electronic device or charging (conducting current) from the charger to the battery cell.

According to the above-mentioned configuration, because the space between the discharging-signal terminal and the charging-signal terminal(s) is increased (as compared to conventional designs), it becomes easier for the user to visually distinguish the discharging-signal terminal from the charging-signal terminal(s).

### Working Example: Charging System 2

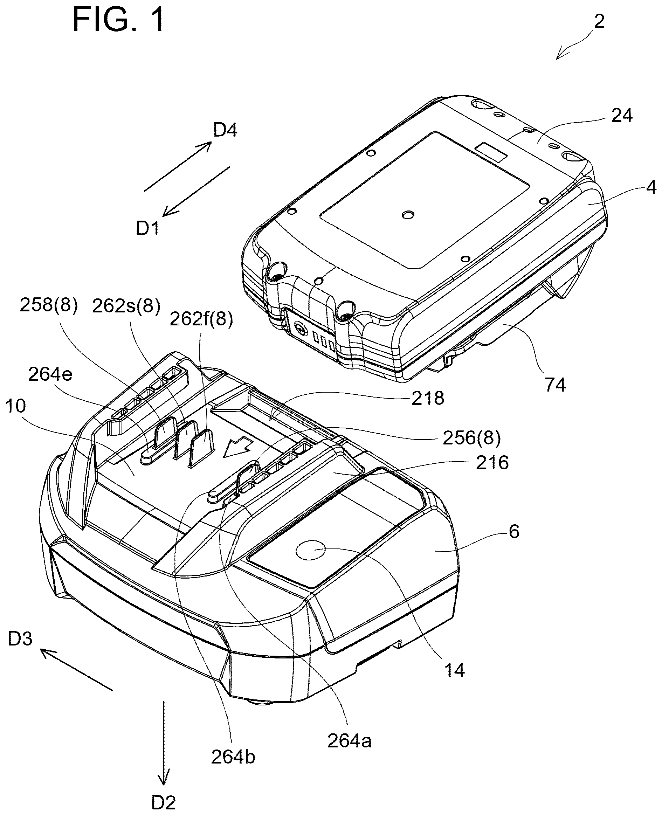

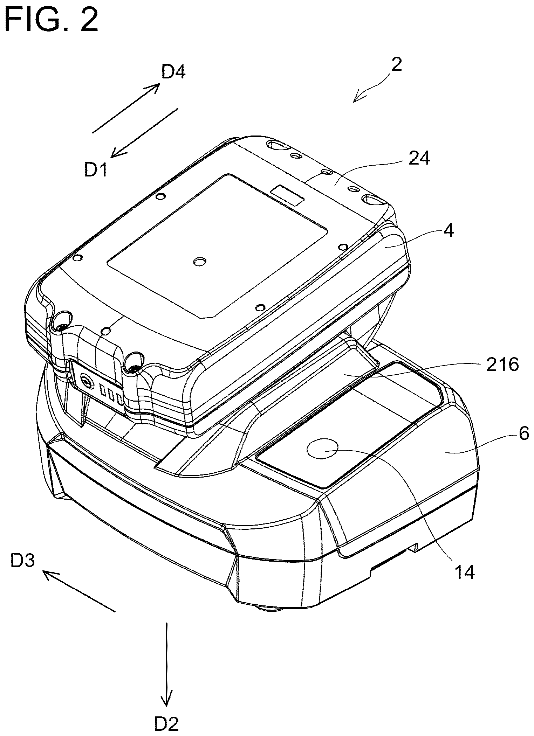

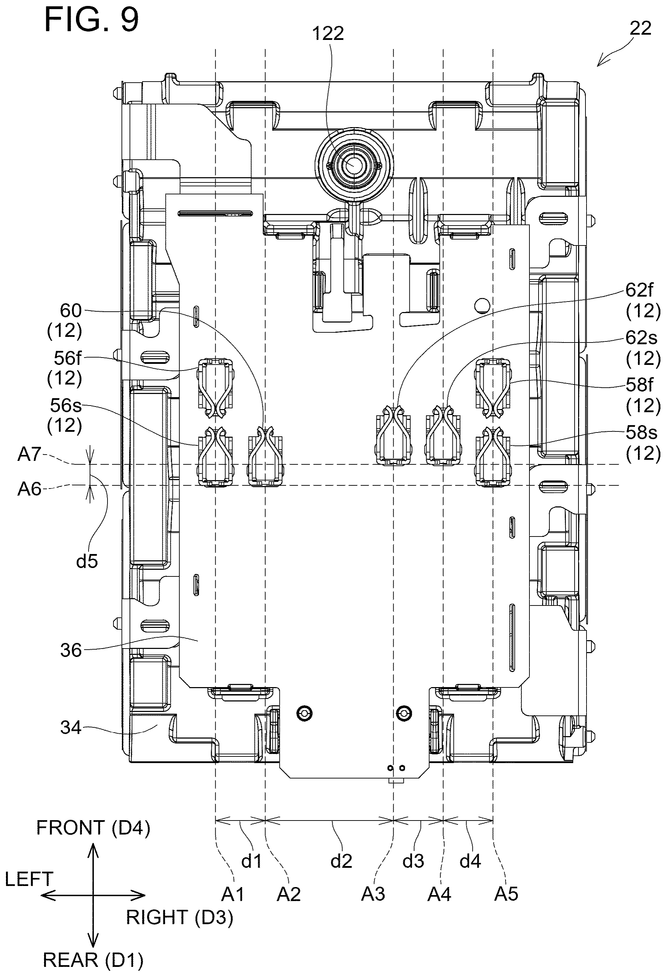

As shown in FIG. 1 and FIG. 2, a charging system 2 according to the present teachings comprises a battery pack 4 and a charger 6 that charges the battery pack 4. The charger 6 has a terminal-mounting surface 10, from which sheet-shaped (rib-shaped, fin-shaped), device-side terminals 8 protrude (perpendicular to the terminal-mounting surface 10). The battery pack 4 is mountable on the charger 6 by sliding the battery pack 4 in a first direction D1 parallel to the terminal-mounting surface 10. By mounting the battery pack 4 on the charger 6, the device-side terminals 8 respectively engage with battery-side terminals 12 of the battery pack 4 (see FIG. 9) to enable charging (conduction of charging (i.e. relatively large) current) from the charger 6 to the battery pack 4. The battery pack 4 mounted on the charger 6 is removed from the charger 6 by sliding the battery pack 4 in a fourth direction D4 that is opposite of the (first) direction when the battery pack 4 is being mounted on the charger 6. In addition, the charger 6 comprises an indicator part (a display or an illumination device, such as one or more LEDs) 14, which indicates the charging state (status) of the battery pack 4 (for example, whether or not the battery pack 4 is currently charging).

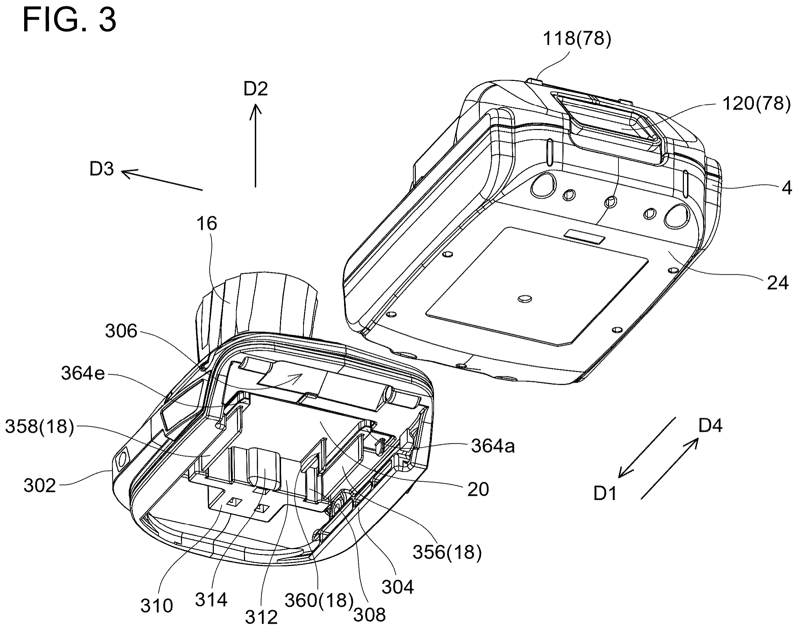

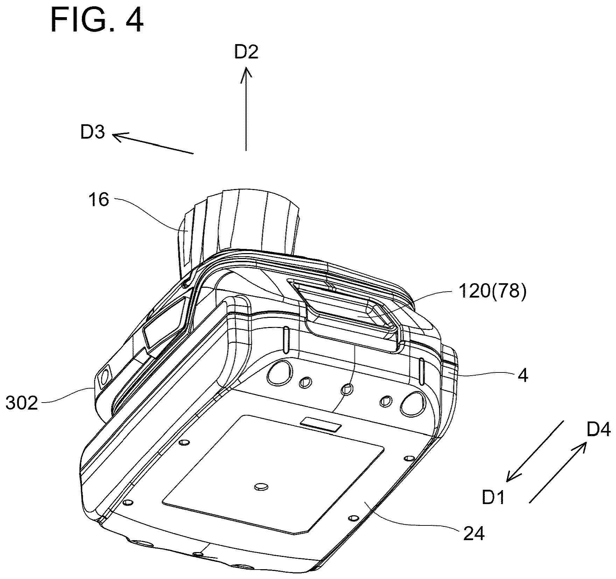

As shown in FIG. 3 and FIG. 4, the battery pack 4 is mountable on an electric work machine 16 (partially shown) in a detachable manner to function as a power source that supplies power to the electric work machine 16. The electric work machine 16 may be, for example and without limitation, an electric drill, an electric grinder, an electric circular saw, an electric chain saw, an electric reciprocating saw, an electric lawnmower, an electric brush cutter, or an electric blower. The electric work machine 16 has a terminal-mounting surface 20, from which sheet-shaped (rib-shaped, fin-shaped), device-side terminals 18 protrude (perpendicular to the terminal-mounting surface 10). The battery pack 4 is mounted on the electric work machine 16 by sliding the battery pack 4 in first direction D1 that is parallel to the terminal-mounting surface 20. By mounting the battery pack 4 on the electric work machine 16, the device-side terminals 18 respectively engage with the battery-side terminals 12 of the battery pack 4 (see FIG. 9) to enable discharging (conduction of drive (i.e. relatively large) current) from the battery pack 4 to the electric work machine 16. The battery pack 4 mounted on the electric work machine 16 is removed from the electric work machine 16 by sliding the battery pack 4 in a fourth direction D4 that is opposite of the (first) direction when the battery pack 4 is being mounted on the electric work machine 16.

In the present working example, the direction in which the battery pack 4 is slid when mounting the battery pack 4 on the charger 6 (or the electric work machine 16) is defined as the above-mentioned first direction D1. In addition, a direction that is orthogonal to first direction D1 and is the direction from the battery pack 4 toward the terminal-mounting surface 10 of the charger 6 (or the terminal-mounting surface 20 of the electric work machine 16) when the battery pack 4 is mounted on the charger 6 or the electric work machine 16 is defined as second direction D2. In addition, a direction that is orthogonal to first direction D1 and second direction D2 and is the direction in which the battery pack 4 is located, as viewed from the indicator part 14 when the battery pack 4 has been mounted on the charger 6, is defined as third direction D3. In addition, the (colinear) direction opposite to first direction D1 is defined as the above-mentioned fourth direction D4. As was explained above, fourth direction D4 is the direction in which the battery pack 4 is slid when removing the battery pack 4 from the charger 6 (or the electric work machine 16).

### Configuration of Battery Pack 4

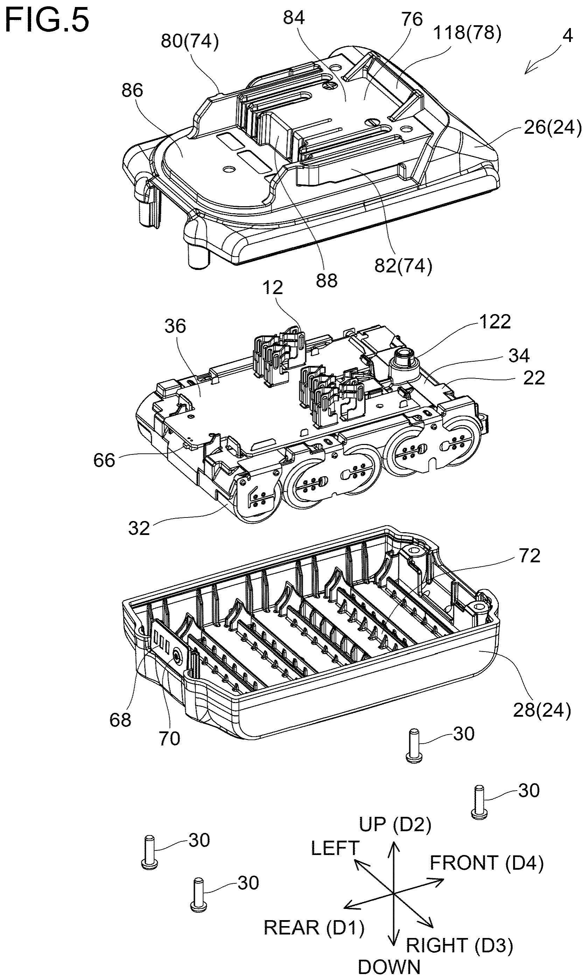

First, the description will focus on the battery pack 4. Here, the front, rear, up, down, left, and right directions are defined with reference to the battery pack 4. Specifically, a direction that coincides with first direction D1 described above (i.e., the direction in which the battery pack 4 is slid when mounting the battery pack 4 on the charger 6 or the electric work machine 16) is defined as the rear direction of the battery pack 4. A direction that coincides with fourth direction D4 described above (i.e., the direction in which the battery pack 4 is slid when removing the battery pack 4 from the charger 6 or the electric work machine 16) is defined as the front direction of the battery pack 4. A direction that coincides with second direction D2 described above (i.e., a direction that is orthogonal to first direction D1 and is the direction from the battery pack 4 toward the terminal-mounting surface 10 or the terminal-mounting surface 20) is defined as the up direction of the battery pack 4. The direction opposite to the up direction of the battery pack 4 is defined as the down direction of the battery pack 4. A direction that coincides with third direction D3 described above (i.e., a direction that is orthogonal to first direction D1 and second direction D2 and is the direction in which the battery pack 4 is located as viewed from the indicator part 14) is defined as the right direction of the battery pack 4. The direction opposite to the right direction of the battery pack 4 is defined as the left direction of the battery pack 4. In FIGS. 5-12, which illustrate only the battery pack 4, the front, rear, up, down, left, and right directions are illustrated with reference to the battery pack 4.

As shown in FIG. 5, the battery pack 4 comprises a battery module 22 and an outer case 24, which houses the battery module 22. The outer case 24 has a substantially rectangular-parallelepiped shape that defines a front surface, a rear surface, an upper surface, a lower surface, a left surface, and a right surface. The outer case 24 is divided into an upper-part case 26 and a lower-part case 28. The upper-part case 26 and the lower-part case 28 are affixed to each other by four screws 30.

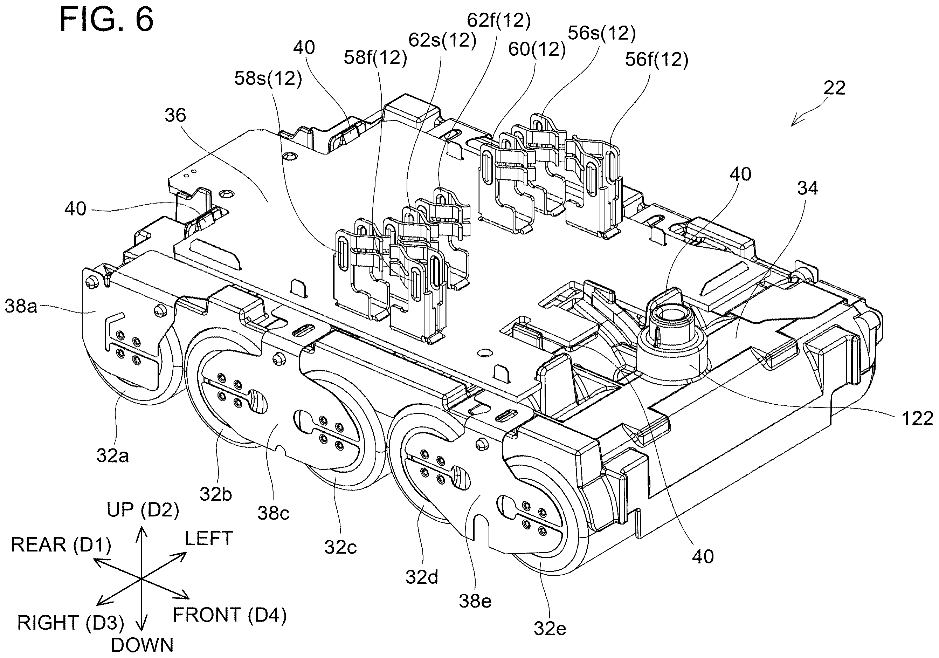

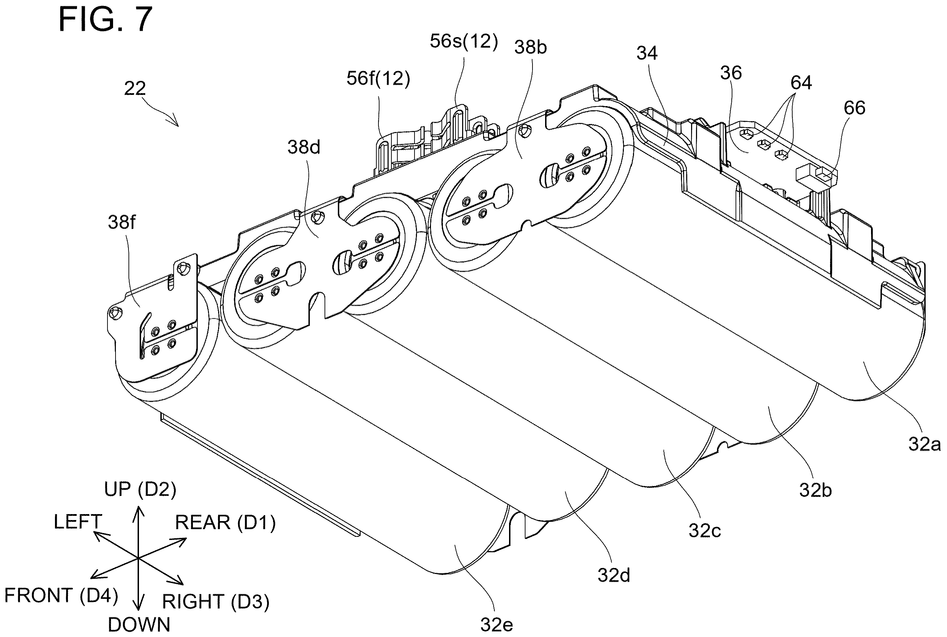

As shown in FIG. 6 and FIG. 7, the battery module 22 comprises five battery cells 32, a cell cover 34, and a circuit board 36. Each of the battery cells 32 is a circular-cylindrical-shaped secondary-battery cell, e.g., a lithium-ion battery cell, in which a positive electrode is formed at one end and a negative electrode is formed at the other end. The rated voltage of each of the battery cells 32 is, for example, 3.6 V. In addition, a material having electrical insulating properties, e.g., a plastic, is used as (to form) the cell cover 34. The cell cover 34 covers the five battery cells 32 from above. The lower surface of the cell cover 34 has a shape that conforms to the outer-circumferential surfaces of the battery cells 32. The battery cells 32 are positioned by abutting the lower surface of the cell cover 34 on the battery cells 32. The battery cells 32 are disposed such that the longitudinal directions thereof lie along the left-right direction, and the battery cells 32 that are adjacent to each other are arrayed in the front-rear direction. In addition, the battery cells 32 are disposed such that, for any two of the battery cells 32 that are adjacent to each other in the front-rear direction, the direction from the positive electrode to the negative electrode of one of the battery cells 32 is opposite to other of the battery cells 32.

Lead plates 38a, 38b, 38c, 38d, 38e, 38f made of metal are mounted on the left-side surface and the right-side surface of the cell cover 34. The lead plates 38a, 38b, 38c, 38d, 38e, 38f are disposed spaced apart from each other so as to be electrically insulated (isolated) from each other. The lead plate 38a shown in FIG. 6 is connected to the negative electrode of battery cell 32a, which is located the farthest rearward. The lead plate 38b shown in FIG. 7 connects the positive electrode of the battery cell 32a and the negative electrode of battery cell 32b, which is arrayed (located) forward of the battery cell 32a. The lead plate 38c shown in FIG. 6 connects the positive electrode of the battery cell 32b and the negative electrode of battery cell 32c, which is arrayed (located) forward of the battery cell 32b. The lead plate 38d shown in FIG. 7 connects the positive electrode of the battery cell 32c and the negative electrode of battery cell 32d, which is arrayed (located) forward of the battery cell 32c. The lead plate 38e shown in FIG. 6 connects the positive electrode of the battery cell 32d and the negative electrode of battery cell 32e, which is arrayed (located) forward of the battery cell 32d. The lead plate 38f shown in FIG. 7 is connected to the positive electrode of the battery cell 32e. The five battery cells 32 are electrically connected with each other in series via the lead plates 38a, 38b, 38c, 38d, 38e, 38f. The rated voltage of the battery pack 4 is thereby 18 V.

As shown in FIG. 6, the circuit board 36 is snap-fit connected to the upper surface of the cell cover 34. Specifically, tabs 40 provided on the upper surface of the cell cover 34 engage with the circuit board 36. The circuit board 36 is disposed along a plane orthogonal to the up-down direction (e.g., a plane defined by first direction D1, third direction D3 and fourth direction D4). The plurality of battery-side terminals 12 is provided on an upper surface of the circuit board 36.

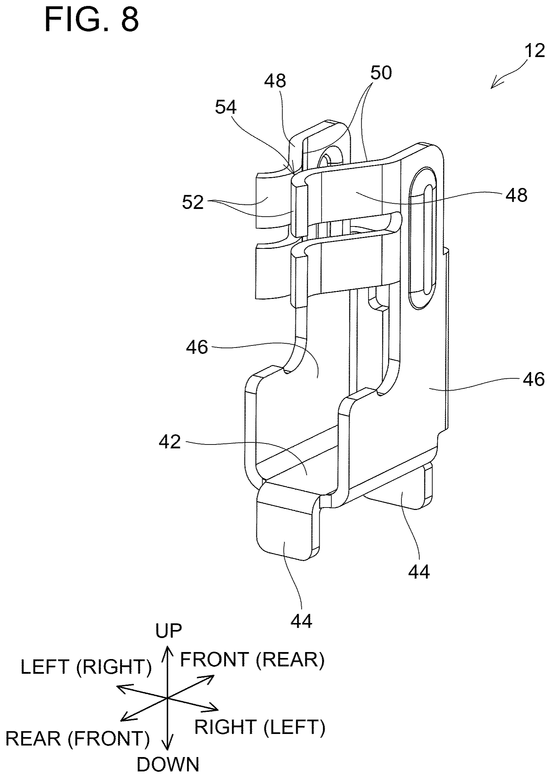

As shown in FIG. 8, each of the battery-side terminals 12 comprises a base portion 42 having a flat sheet shape that follows (is parallel to) the circuit board 36, two leg portions 44 respectively extending downward (perpendicularly) from the front end and the rear end of the base portion 42, two arm portions 46 respectively extending (perpendicularly) upward from the left end and the right end of the base portion 42, and two spring (pinching, clamping) portions 48 respectively extending from the two arm portions 46. Each of the two leg portions 44 is fixed to the circuit board 36 by being pushed into through holes (not shown) formed in the circuit board 36. The two spring portions 48 are so-called leaf springs, each of which is elastically deformable in the left-right direction (third direction D3). The two spring portions 48 have: first guide portions 50, the distance between which in the left-right direction decreases as the distance from the base ends thereof (i.e., from the arm portions 46) increases; second guide portions 52, the distance between which in the left-right direction decreases as the distance from the tip ends thereof increases; and contact portions 54, which are located between the first guide portions 50 and the second guide portions 52.

When mounting the battery pack 4 on the charger 6, the device-side terminals 8 of the charger 6, which move in the front-rear direction relative to the battery pack 4 (see FIG. 1), pass between the respective two arm portions 46, push apart the respective first guide portions 50 (and the respective second guide portions 52), and are respectively disposed between the contact portions 54. In this manner, the device-side terminals 8 are pinched (clamped, squeezed) in the left-right direction by the battery-side terminals 12. Similarly, when mounting the battery pack 4 on the electric work machine 16, the device-side terminals 18 of the electric work machine 16, which move in the front-rear direction relative to the battery pack 4 (see FIG. 3), pass between the respective two arm portions 46, push apart the respective first guide portions 50 (and the respective second guide portions 52), and are respectively disposed between the contact portions 54. In this manner, the device-side terminals 18 are pinched (clamped, squeezed) in the left-right direction by the battery-side terminals 12.

As shown in FIG. 9, the plurality of battery-side terminals 12 includes: two battery-side, positive-electrode terminals 56f, 56s used for discharging or charging (for conducting relatively large currents either for supplying electric (drive) current to an electronic device (electronic work machine) 16 attached to the battery pack 4 or for receiving electric (charging) current from a charger 6 attached to the battery pack 4 to recharge the battery cells 32); two battery-side, negative-electrode terminals 58f, 58s used for discharging or charging (for conducting relatively large currents either for supplying electric (drive) current to an electronic device (electronic work machine) attached to the battery pack 4 or for receiving electric (charging) current from a charger 6 attached to the battery pack 4 to recharge the battery cells 32); one battery-side, discharging-signal terminal 60 used for signal communication with (conducting electric signals, e.g., relatively low current control signals, to/from) the electric work machine 16; and two battery-side, charging-signal terminals 62f, 62s used for signal communication with (conducting electric signals, e.g., relatively low current control signals, to/from) the charger 6.

Both of the battery-side, positive-electrode terminals 56f, 56s are disposed (aligned) along first virtual axis A1, which is parallel to the front-rear direction (D1-D4 direction). Specifically, the battery-side, positive-electrode terminal 56f is disposed such that first virtual axis A1 is positioned in (intersects) the middle of the contact portions 54 (see FIG. 8) with the second guide portions 52 (see FIG. 8) in a rearward-facing orientation. The battery-side, positive-electrode terminal 56s is disposed such that first virtual axis A1 also is positioned in (intersects) the middle of the contact portions 54 (see FIG. 8) with the second guide portions 52 (see FIG. 8) in a forward-facing orientation. The battery-side, positive-electrode terminal 56s is disposed rearward of the battery-side, positive-electrode terminal 56f (i.e. offset or spaced apart from the battery-side, positive-electrode terminal 56f in fourth direction D4).

The battery-side, discharging-signal terminal 60 is disposed (aligned) along second virtual axis A2, which is parallel to virtual axis A1 and is offset to the right of first virtual axis A1 by first distance d1. Specifically, the battery-side, discharging-signal terminal 60 is disposed such that second virtual axis A2 is positioned in (intersects) the middle of the contact portions 54 (see FIG. 8) with the second guide portions 52 (see FIG. 8) in a forward-facing orientation. First distance d1 is within a range of 6.0-8.0 mm and is, for example, 6.5 mm, 7.0 mm, or 7.5 mm.

The battery-side, charging-signal terminal 62f is disposed (aligned) along third virtual axis A3, which is parallel to virtual axes A1, A2 and is offset to the right of second virtual axis A2 by second distance d2. Specifically, the battery-side, charging-signal terminal 62f is disposed such that third virtual axis A3 is positioned in (intersects) the middle of the contact portions 54 (see FIG. 8) with the second guide portions 52 (see FIG. 8) in a forward-facing orientation. Second distance d2 is within a range of 17.0-19.0 mm and is, for example, 17.5 mm, 18.0 mm, or 18.5 mm.

The battery-side, charging-signal terminal 62s is disposed (aligned) along fourth virtual axis A4, which is parallel to virtual axes A1-A3 and is offset to the right of third virtual axis A3 by third distance d3. Specifically, the battery-side, charging-signal terminal 62s is disposed such that fourth virtual axis A4 is positioned in (intersects) the middle of the contact portions 54 (see FIG. 8) with the second guide portions 52 (see FIG. 8) in a forward-facing orientation. Third distance d3 is within a range of 6.0-8.0 mm and is, for example, 6.5 mm, 7.0 mm, or 7.5 mm.

Both of the battery-side, negative-electrode terminals 58f, 58s are disposed (aligned) along fifth virtual axis A5, which is parallel to virtual axes A1-A4 and is offset to the right of fourth virtual axis A4 by fourth distance d4. Specifically, the battery-side, negative-electrode terminal 58f is disposed such that fifth virtual axis A5 is positioned in the middle of the contact portion 54 (see FIG. 8) with the second guide portions 52 (see FIG. 8) in a rearward-facing orientation. The battery-side, negative-electrode terminal 58s is disposed such that fifth virtual axis A5 also is positioned in (intersects) the middle of the contact portion 54 (see FIG. 8) with the second guide portions 52 (see FIG. 8) in a forward-facing orientation. The battery-side, negative-electrode terminal 58s is disposed rearward of the battery-side, negative-electrode terminal 58f. Fourth distance d4 is within a range of 6.0-8.0 mm and is, for example, 6.5 mm, 7.0 mm, or 7.5 mm.

In the present working example, first distance d1, third distance d3, and fourth distance d4 are set to values (distances) that are equal to each other. Second distance d2 is set to a value that is greater than each of first distance d1, third distance d3, and fourth distance d4. For example, second distance d2 is set to a value equal to or greater than two times each of first distance d1, third distance d3, and fourth distance d4. Alternatively, the ratio of first distance d1, second distance d2, third distance d3, and fourth distance d4 is set to a predetermined ratio (e.g., 7:18:7:7).

The battery-side, positive-electrode terminal 56s, the battery-side, discharging-signal terminal 60, and the battery-side, negative-electrode terminal 58s are disposed at the same location in the front-rear direction. Specifically, the rear-end location of the battery-side, positive-electrode terminal 56s, the rear-end location of the battery-side, discharging-signal terminal 60, and the rear-end location of the battery-side, negative-electrode terminal 58s are disposed along (are intersected by) sixth virtual axis A6, which is parallel to the left-right direction (third direction D3). The battery-side, charging-signal terminal 62f and the battery-side, charging-signal terminal 62s are disposed at the same location in the front-rear direction. Specifically, the rear-end location of the battery-side, charging-signal terminal 62f and the rear-end location of the battery-side, charging-signal terminal 62s are disposed along (are intersected by) seventh virtual axis A7, which is also parallel to the left-right direction (aligned). Seventh virtual axis A7 is offset forward of sixth virtual axis A6 by fifth distance d5. That is, the rear-end location of the battery-side, charging-signal terminal 62f and the rear-end location of the battery-side, charging-signal terminal 62s are offset forward of the battery-side, positive-electrode terminal 56s, the battery-side, discharging-signal terminal 60, and the battery-side, negative-electrode terminal 58s by fifth distance d5. Fifth distance d5 is within a range of 1.0-13.0 mm and is, for example, 3.0 mm.

As shown in FIG. 7, three LEDs 64 and a switch 66 are provided on the lower surface of the circuit board 36 at a rear portion of the circuit board 36. As shown in FIG. 5, a remaining-charge display window 68, through which light from one or more of the three LEDs 64 passes, and a button 70, which is for the user to turn the switch 66 ON/OFF, are provided on a rear wall of the lower-part case 28. The battery pack 4 can display the remaining charge of the battery pack 4 by causing one, two or three of the LEDs 64 to emit light. In addition, when the button 70 is manipulated (e.g., pressed), the battery pack 4 switches the display of the remaining charge ON/OFF each time the switch 66 is turned ON/OFF. In addition, as also shown in FIG. 5, a plurality of support projections 72 is provided on a bottom wall of the lower-part case 28. The support projections 72 protrude upward from the bottom wall of the lower-part case 28. The support projections 72 are shaped to conform to the outer-circumferential surfaces of the battery cells 32. The support projections 72 support the battery cells 32 by abutting the support projections 72 against the outer-circumferential surfaces of the battery cells 32 (i.e. the battery cells 32 sit in the wells or valleys defined by the support projections 72).

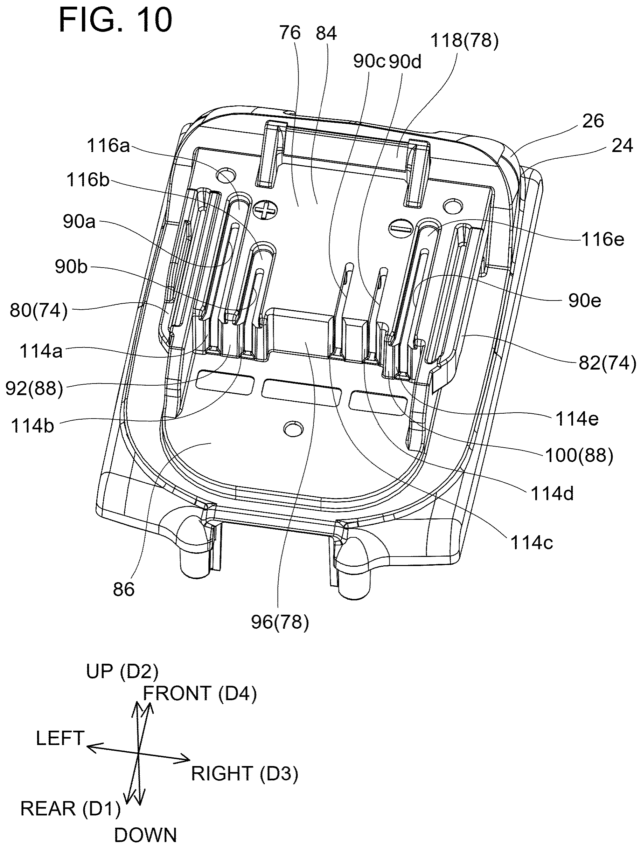

As shown in FIG. 10, the upper-part case 26 comprises slide rails 74, a terminals-receiving part 76, and a hook 78. The terminals-receiving part 76 is a portion of the housing of the battery pack 4 that is configured to accommodate (receive) device-side terminals (8, 18) when the battery pack 4 is mounted on a charger 6 or on the electric work machine 16.

When the battery pack 4 is being mounted on or detached from the charger 6 or the electric work machine 16, the slide rails 74 engage in a slidable manner with slide rails 216, with which the charger 6 is provided (see FIG. 1), or with slide rails 304, with which the electric work machine 16 is provided (see FIG. 3). The slide rails 74 include a first rail 80, which is disposed on a left-upper portion of the upper-part case 26, and a second rail 82, which is disposed on a right-upper portion of the upper-part case 26.

The terminals-receiving part 76 is an upper portion of the upper-part case 26 and is disposed between the first rail 80 and the second rail 82. The terminals-receiving part 76 comprises: a front-side flat wall 84, which extends orthogonally to the up-down direction (i.e. extends in a first plane defined by first direction D1, third direction D3 and fourth direction D4) at a front portion of the upper-part case 26; a rear-side flat wall 86, which extends orthogonally to the up-down direction (i.e. extends in a second plane defined by first direction D1, third direction D3 and fourth direction D4 and parallel to the first plane) at a rear portion of the upper-part case 26; a (at least one) standing wall 88, which extends in a direction orthogonal to the front-rear direction (i.e. extends in a plane defined by second direction D2 and third direction D3) and connects the front-side flat wall 84 and the rear-side flat wall 86; and a plurality of slits (slots) 90a, 90b, 90c, 90d, 90e, each of which is formed spanning the standing wall 88 and the front-side flat wall 84 (i.e. the slits 90a, 90b, 90c, 90d, 90e pass (penetrate) through portions of the standing wall 88 and the front-side flat wall 84). The upper surface of the front-side flat wall 84 is connected, in a flush manner, to each of the upper surface of the first rail 80 and the upper surface of the second rail 82. The upper surface of the rear-side flat wall 86 is offset downward relative to the upper surface of the front-side flat wall 84.

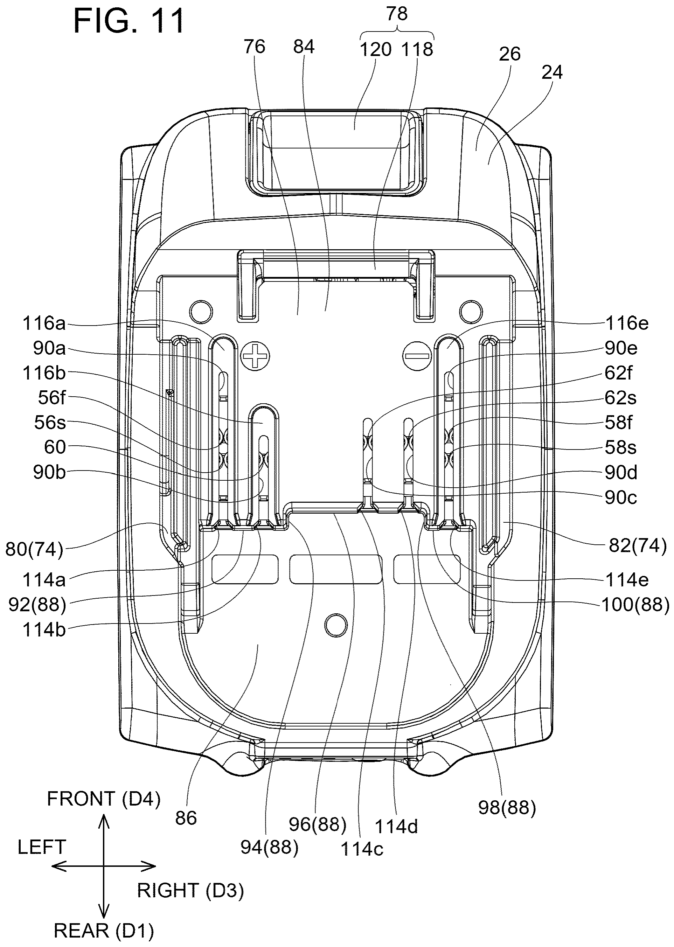

As shown in FIGS. 10 and 11, the standing wall 88 comprises: first flat-wall portions 92 extending rightward (in third direction D3) from the right-side surface of the first rail 80; a first connecting portion 94 extending forward from the right end of the first flat-wall portions 92; second flat-wall portions 96 extending rightward from the front end of the first connecting portion 94; a second connecting portion 98 extending rearward from the right end of the second flat-wall portions 96; and third flat-wall portions 100 extending rightward from the rear end of the second connecting portion 98 and connecting to the left-side surface of the second rail 82. In the left-right direction (third direction D3), the first flat-wall portions 92 and the second flat-wall portions 96 are adjacent to each other, and the second flat-wall portions 96 and the third flat-wall portions 100 are adjacent to each other. In the front-rear direction, the location of the first flat-wall portions 92 and the location of the third flat-wall portions 100 are aligned with each other. Specifically, a rear surface of the first flat-wall portions 92 and a rear surface of the third flat-wall portions 100 are flush. In addition, the second flat-wall portions 96 are offset forward (in fourth direction D4) relative to both the first flat-wall portions 92 and the third flat-wall portions 100. Specifically, a rear surface of the second flat-wall portions 96 is offset forward (in fourth direction D4) relative to both the rear surface of the first flat-wall portions 92 and the rear surface of the third flat-wall portions 100.

The slits 90a, 90b, 90c, 90d, 90e are arrayed from left to right in the order of the slit 90a, the slit 90b, the slit 90c, the slit 90d, and the slit 90e. The slit 90a is disposed at a location that opposes (faces, is adjacent to) the battery-side, positive-electrode terminals 56f, 56s in the up-down direction (second direction D2) and (opposes (faces, is adjacent to) the battery-side, positive-electrode terminal 56s in the front-rear direction (first direction D1). The slit 90a receives the device-side terminals 8, 18 corresponding to the battery-side, positive-electrode terminals 56f, 56s (i.e., a device-side, positive-electrode terminal 256 of the charger 6 as shown in FIG. 1 and a device-side, positive-electrode terminal 356 of the electric work machine 16 as shown in FIG. 3) in the interior of the outer case 24 (i.e. in the interior of the terminals-receiving part 76). The slit 90b is disposed at a location that opposes (faces, is adjacent to) the battery-side, discharging-signal terminal 60 in the up-down direction (second direction D2) and in the front-rear direction (first direction D1). The slit 90b receives the device-side terminal 18 corresponding to the battery-side, discharging-signal terminal 60 (i.e., a device-side, discharging-signal terminal 360 of the electric work machine 16 as shown in FIG. 3) in the interior of the outer case 24. The slit 90c is disposed at a location that opposes (faces, is adjacent to) the battery-side, charging-signal terminal 62f in the up-down direction (second direction D2) and in the front-rear direction (first direction D1). The slit 90c receives the device-side terminal 8 corresponding to the (first) battery-side, charging-signal terminal 62f (i.e., a (first) device-side, charging-signal terminal 262f of the charger 6 as shown in FIG. 1) in the interior of the outer case 24. The slit 90d is disposed at a location that opposes (faces, is adjacent to) the (second) battery-side, charging-signal terminal 62s in the up-down direction (second direction D2) and in the front-rear direction (first direction D1). The slit 90d receives the device-side terminal 8 corresponding to the battery-side, charging-signal terminal 62s (i.e., a (second) device-side, charging-signal terminal 262s of the charger 6 as shown in FIG. 1) in the interior of the outer case 24. The slit 90e is disposed at a location that opposes (faces, is adjacent to) the battery-side, negative-electrode terminals 58f, 58s in the up-down direction (second direction D2) and (opposes (faces, is adjacent to) the battery-side, negative-electrode terminal 58s in the front-rear direction (first direction D1). The slit 90e receives the device-side terminals 8, 18 corresponding to the battery-side, negative-electrode terminals 58f, 58s (i.e., a device-side, negative-electrode terminal 258 of the charger 6 as shown in FIG. 1 and a device-side, negative-electrode terminal 358 of the electric work machine 16 as shown in FIG. 3) in the interior of the outer case 24.

The slit 90a and the slit 90b are formed spanning (passing, penetrating through or between) the first flat-wall portions 92 of the standing wall 88 and the front-side flat wall 84. The slit 90c and the slit 90d are formed spanning (passing, penetrating through or between) the second flat-wall portions 96 of the standing wall 88 and the front-side flat wall 84. The slit 90e is formed spanning (passing, penetrating through or between) the third flat-wall portions 100 of the standing wall 88 and the front-side flat wall 84.

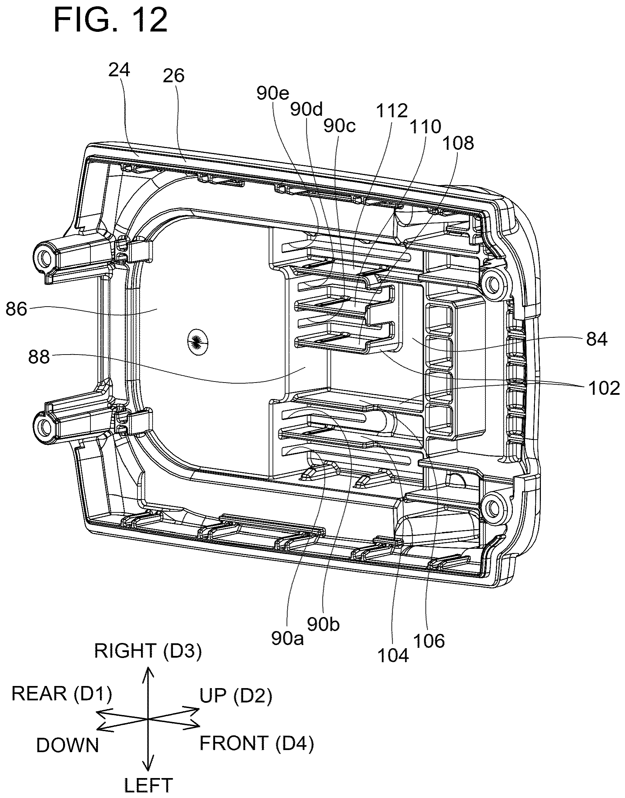

As shown in FIG. 12, the terminals-receiving part 76 further comprises partition walls 102, which extend forward (in fourth direction D4) from an inner surface of the standing wall 88 and extend downward from an inner surface of the front-side flat wall 84. The partition walls 102 comprise: a first partition 104 extending between the slit 90a and the slit 90b in the front-rear direction; a second partition 106 that passes rightward of the slit 90b and extends along the front-rear direction; a third partition 108 that passes leftward of the slit 90c and extends along the front-rear direction; a fourth partition 110 that passes between the slit 90c and the slit 90d and extends in the front-rear direction; and a fifth partition 112 that passes between the slit 90d and the slit 90e and extends in the front-rear direction.

As shown in FIGS. 10 and 11, the terminals-receiving part 76 further has a plurality of guide recessed portions 114a, 114b, 114c, 114d, 114e and a plurality of mating recessed portions 116a, 116b, 116e. The guide recessed portions 114a, 114b, 114c, 114d, 114e are formed by recessing the rear surface of the standing wall 88 in the forward direction (fourth direction D4) around the slits 90a, 90b, 90c, 90d, 90e, respectively. The left-right widths of the guide recessed portions 114a, 114b, 114c, 114d, 114e decrease as they go (extend) forward. The guide recessed portions 114a, 114b, 114c, 114d, 114e guide the device-side terminals 8 (or the device-side terminals 18), when being moved forward from rearward of the standing wall 88, into the slits 90a, 90b, 90c, 90d, 90e, respectively. In addition, the mating recessed portions 116a, 116b, 116e are formed by recessing the upper surface of the front-side flat wall 84 downward around the slits 90a, 90b, 90e, respectively. The rear ends of the mating recessed portions 116a, 116b, 116e are connected to the upper ends of the guide recessed portions 114a, 114b, 114e. The mating recessed portions 116a, 116b, 116e respectively receive mating protruding portions 264a, 264b, 264e protruding from the terminal-mounting surface 10 of the charger 6 (see FIG. 1) and mating protruding portions 364a, 364e protruding from the terminal-mounting surface 20 of the electric work machine 16 (see FIG. 3). It is noted that recessed portions are not provided around either of the slit 90c and the slit 90d.

As shown in FIG. 11, the hook 78 is movably disposed on a forward-upper portion of the upper-part case 26. The hook 78 has a protruding portion 118 and a manipulable portion 120. The protruding portion 118 protrudes toward the exterior of the outer case 24 (i.e. in second direction D2). The manipulable portion 120 is exposed to the exterior of the outer case 24 and disposed at a location such that it can be manipulated by the user even in the state in which the battery pack 4 is mounted on the charger 6 or the electric work machine 16. The hook 78 is movable relative to the outer case 24. The hook 78 is biased toward the exterior (in second direction D2) of the outer case 24 by a compression spring (not shown), which is mounted on a projection 122 (see FIG. 6) formed on the upper surface of the cell cover 34. When the manipulable portion 120 or the protruding portion 118 is pressed toward the interior of the outer case 24, the hook 78 moves into the interior of the outer case 24 against the biasing force of the compression spring. When the battery pack 4 is mounted on the charger 6 or the electric work machine 16, the protruding portion 118 engages with an engaging groove 218 of the charger 6 (see FIG. 1) or an engaging groove 306 of the electric work machine 16 (see FIG. 3), thereby (temporarily and releasably) fixing the battery pack 4 to the charger 6 or the electric work machine 16. When removing the battery pack 4 from the charger 6 or the electric work machine 16, the manipulable portion 120 is pushed into the interior of the outer case 24, thereby retracting the protruding portion 118 into the interior of the outer case 24. The engagement between the protruding portion 118 and the engaging groove 218, 306 is thereby released. In this state, the battery pack 4 can be removed from the charger 6 or the electric work machine 16 by sliding the battery pack 4 in the front direction.

### Configuration of Charger 6

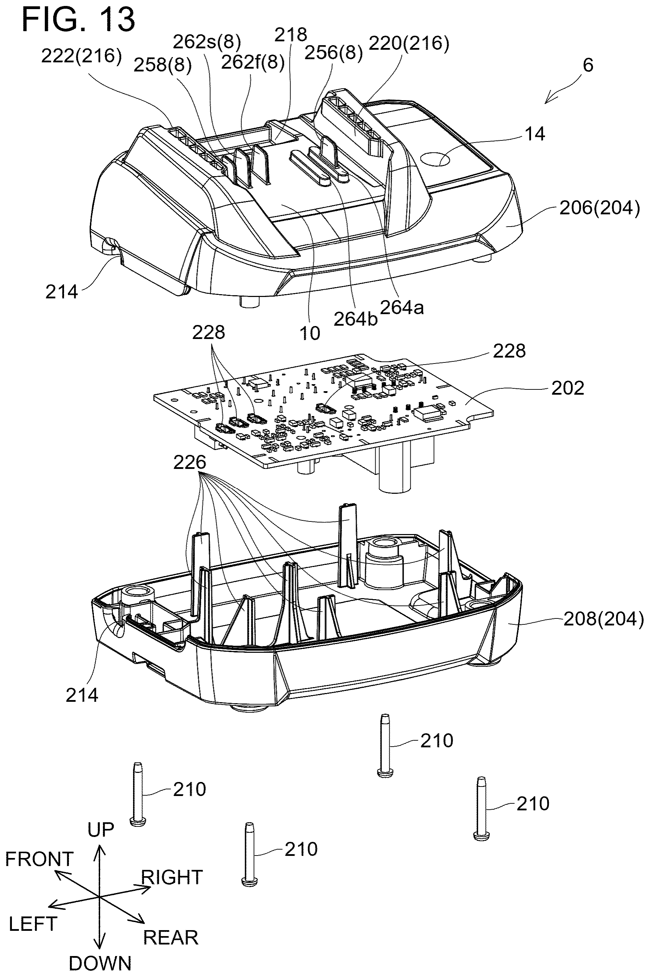

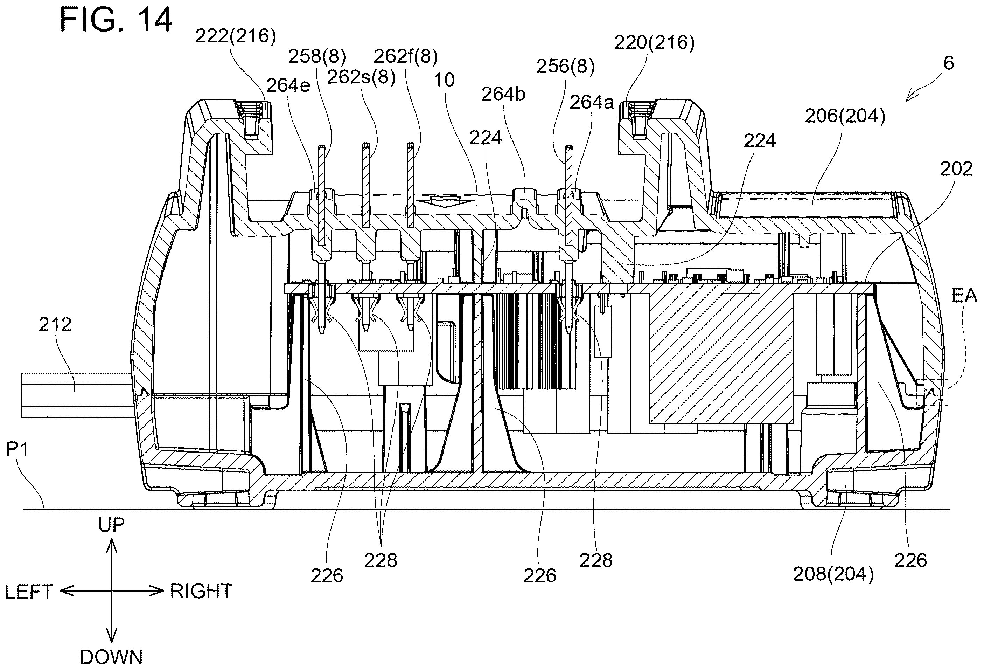

Next, the description will focus on the charger 6. Here, the front, rear, up, down, left, and right directions are defined with reference to the charger 6 separately from the front, rear, up, down, left, and right directions defined with reference to the battery pack 4. As shown in FIG. 14, the charger 6 is typically used in the state of being placed on a flat support surface P1. In the present working example, a direction that is orthogonal to the support surface P1 and is the direction from the support surface P1 toward the charger 6 is defined as the up direction of the charger 6. A direction that is orthogonal to the support surface P1 and is the direction from the charger 6 toward the support surface P1 is defined as the down direction of the charger 6. In addition, the direction of first direction D1 (see FIG. 1) projected on the support surface P1 is defined as the rear direction, and the opposite direction is defined as the front direction. In addition, the direction of third direction D3 (see FIG. 1) projected on the support surface P1 is defined as the left direction, and the opposite direction is defined as the right direction. In FIGS. 13-17, which show only the charger 6, the front, rear, up, down, left, and right directions are illustrated with reference to the charger 6.

As shown in FIG. 13, the charger 6 comprises a circuit board 202 and a housing 204, which houses the circuit board 202. The housing 204 is divided into an upper-part housing 206 and a lower-part housing 208. The upper-part housing 206 and the lower-part housing 208 are affixed to each other by four screws 210. An opening 214 for disposing (passing through) a power-supply cord 212 (see FIG. 14) is defined in a left wall of the housing 204 between the upper-part housing 206 and the lower-part housing 208.

The upper surface of the upper-part housing 206 is provided with the terminal-mounting surface 10, the slide rails 216, the engaging groove 218, and the indicator part 14. The terminal-mounting surface 10, the slide rails 216, and the engaging groove 218 are disposed on a left portion of the upper surface of the upper-part housing 206. The indicator part 14 is disposed on a right portion of the upper surface of the upper-part housing 206.

The slide rails 216 include a first rail 220, which is disposed rightward of the terminal-mounting surface 10, and a second rail 222, which is disposed leftward of the terminal-mounting surface 10. The first rail 220 engages with the first rail 80 of the battery pack 4 (see FIG. 10) in a slidable manner, thereby supporting the battery pack 4 in a manner so as to be slidable in first direction D1 and fourth direction D4. The second rail 222 engages with the second rail 82 of the battery pack 4 (see FIG. 10) in a slidable manner, thereby supporting the battery pack 4 in a manner so as to be slidable in first direction D1 and fourth direction D4.

The engaging groove 218 is disposed forward of the terminal-mounting surface 10. The protruding portion 118 of the hook 78, which is provided in the battery pack 4 (see FIG. 10), engages with the engaging groove 218.

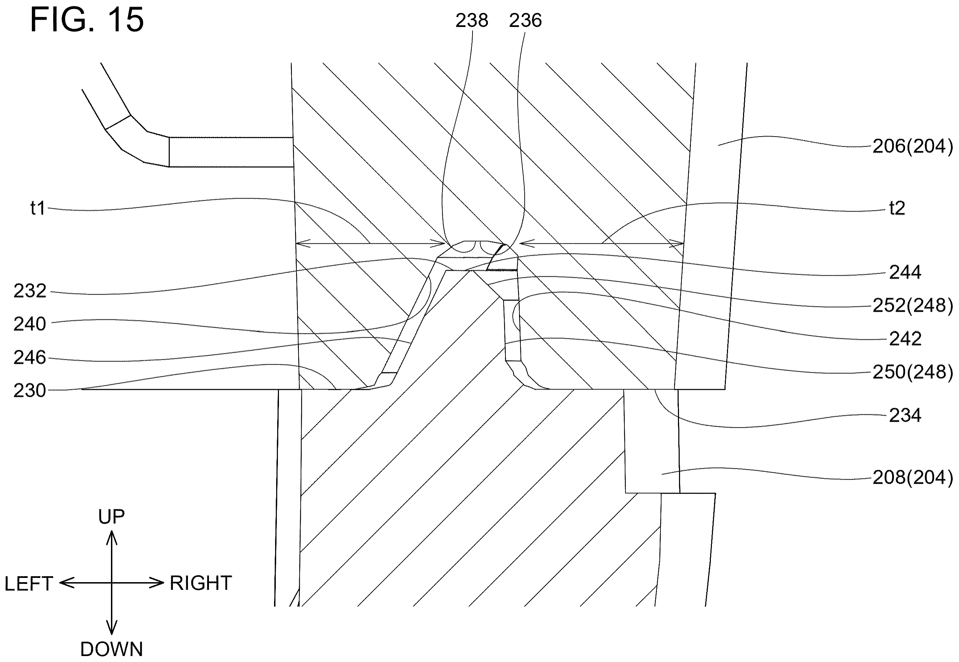

As shown in FIG. 15, the lower-part housing 208 comprises a ridge 232, which protrudes upward from an upper-end surface 230 of the lower-part housing 208. The upper-part housing 206 has a recessed groove 236, which is recessed upward from a lower-end surface 234 of the upper-part housing 206. The ridge 232 enters the recessed groove 236, whereby the upper-part housing 206 and the lower-part housing 208 are positioned relative to each other.

The recessed groove 236 has a downward-facing bottom portion 238, a first side surface 240 located on the inner side of the upper-part housing 206 as viewed from the bottom portion 238, and a second side surface 242 located on the outer side of the upper-part housing 206 as viewed from the bottom portion 238. The first side surface 240 connects the bottom portion 238 and the lower-end surface 234 of the upper-part housing 206. The first side surface 240 is inclined so as to go (extend) toward the interior of the upper-part housing 206 the further downward the surface goes (extends). The second side surface 242 connects the bottom portion 238 and the lower-end surface 234 of the upper-part housing 206. The second side surface 242 extends substantially parallel to the up-down direction. The width of the recessed groove 236 in a direction orthogonal to the up-down direction becomes wider as it goes (extends) away from the bottom portion 238. The recessed groove 236 is arranged at a location at which thickness t1 of the upper-part housing 206 located inward, as viewed from the bottom portion 238, and thickness t2 of the upper-part housing 206 located outward, as viewed from the bottom portion 238, are at least substantially equal, preferably equal.

The ridge 232 has a tip end 244, a first side surface 246 located on the inner side of the lower-part housing 208 as viewed from the tip end 244, and a second side surface 248 located on the outer side of the lower-part housing 208 as viewed from the tip end 244. The first side surface 246 connects the tip end 244 and the upper-end surface 230 of the lower-part housing 208. The first side surface 246 is inclined so as to go (extend) toward the interior of the lower-part housing 208 the further downward the surface goes (extends). The second side surface 248 has a base surface 250, which extends from the upper-end surface 230 of the lower-part housing 208, and a guide surface 252, which extends from the tip end 244 and connects to the base surface 250. The base surface 250 extends substantially parallel to the up-down direction. The guide surface 252 is inclined so as to go (extend) toward the exterior of the lower-part housing 208 the further downward the surface goes (extends). The width of the ridge 232 in the direction orthogonal to the up-down direction becomes wider as it goes (extends) away from the tip end 244.

As shown in FIG. 14, the terminal-mounting surface 10 is inclined relative to the charger 6 (more specifically, to a bottom of the charger 6, which is parallel to the support surface P1) in the front-rear direction. When the counterclockwise direction as viewed from the right is considered to be "positive", the inclination angle of the terminal-mounting surface 10 relative to the charger 6 in the front-rear direction is within a range of, for example, 3°-30°; in the present working example, it is 8°. The inclination angle of the terminal-mounting surface 10 relative to the charger 6 in the front-rear direction can also be said to be the inclination angle of first direction D1 relative to the charger 6 in the front direction, and can also be said to be the inclination angle of fourth direction D4 relative to the charger 6 in the rear direction.

As shown in FIGS. 13, 14 and 17, each of the device-side terminals 8 has a sheet shape (rib shape, fin shape) that is parallel to first direction D1 and second direction D2 and is integrated on (with) the upper-part housing 206 by insert molding. The plurality of device-side terminals 8 includes: the device-side, positive-electrode terminal 256, which is used for charging (conducting relatively large currents) from the charger 6 to the battery pack 4; the device-side, negative-electrode terminal 258, which is used for charging (conducting relatively large currents) from the charger 6 to the battery pack 4; and the two device-side, charging-signal terminals 262f, 262s, which are used for signal communication (conducting relatively low-current electric signals) between the charger 6 and the battery pack 4.

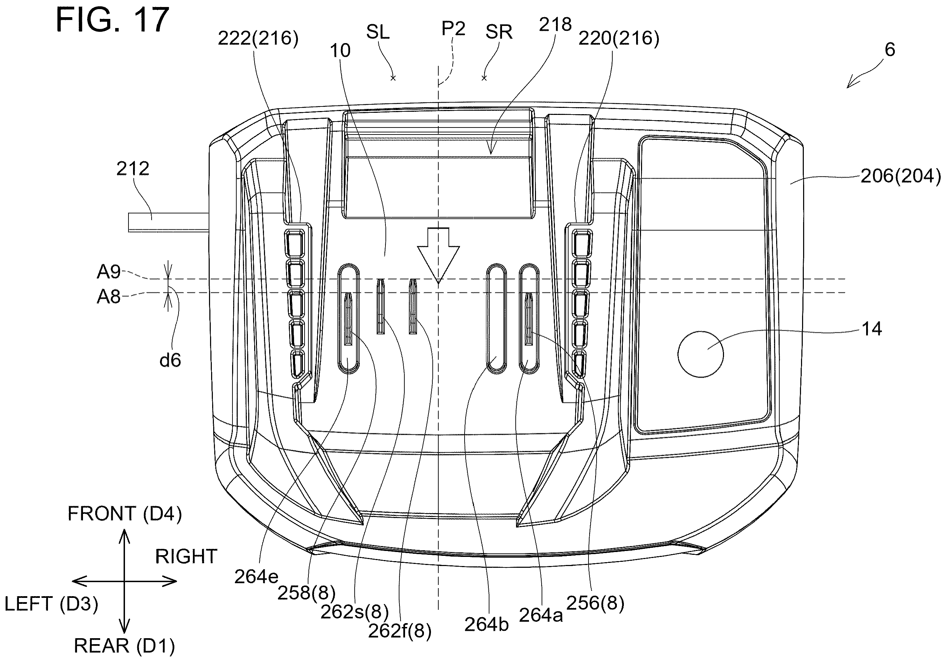

As shown in FIG. 17, each of the two device-side, charging-signal terminals 262f, 262s is disposed in space SL, which is on the left side of virtual plane P2 that bisects, in the left-right direction, the area between the device-side, positive-electrode terminal 256 and the device-side, negative-electrode terminal 258. In addition, the location of an end portion (front end, front edge) of the device-side, positive-electrode terminal 256 in fourth direction D4 and the location of an end portion (front end, front edge) of the device-side, negative-electrode terminal 258 in fourth direction D4 are aligned with each other and disposed on (intersected by) eighth virtual axis A8, which is parallel to the left-right direction (i.e. eight virtual axis A8 intersects the frontmost end of the device-side, positive-electrode terminal 256 and the frontmost end of the device-side, negative-electrode terminal 258). The locations of end portions (front ends, front edges) of the two device-side, charging-signal terminals 262f, 262s in fourth direction D4 are aligned with each other and disposed on (intersected by) ninth virtual axis A9, which is parallel to the left-right direction (i.e. ninth virtual axis A9 intersects the frontmost ends of the two device-side, charging-signal terminals 262f, 262s). Ninth virtual axis A9 is offset from eighth virtual axis A8 in fourth direction D4 by sixth distance d6. That is, the locations of the end portions (frontmost ends) of the two device-side, charging-signal terminals 262f, 262s in fourth direction D4 are offset or shifted, in fourth direction D4 by sixth distance d6, from the location of the end portion (frontmost end) of the device-side, positive-electrode terminal 256 in fourth direction D4 and the location of the end portion (frontmost end) of the device-side, negative-electrode terminal 258 in fourth direction D4. Sixth distance d6 is within a range of 1.0-13.0 mm and is, for example, 3.0 mm. In the present working example, sixth distance d6 is set to the same value as fifth distance d5.

The upper-part housing 206 has the plurality of mating protruding portions 264a, 264b, 264e, which protrude (perpendicularly) upward (in second direction D2) from the terminal-mounting surface 10. The mating protruding portion 264a is disposed such that it contacts (and surrounds) the device-side, positive-electrode terminal 256. The mating protruding portion 264b is disposed such that it does not contact any of the device-side terminals 8. The mating protruding portion 264e is disposed such that it contacts (and surrounds) the device-side, negative-electrode terminal 258. The mating protruding portions 264a, 264b are disposed in space SR, which is on the right side of virtual plane P2. The mating protruding portion 264e is disposed in the space SL, which is on the left side of virtual plane P2. The mating protruding portions 264a, 264b, 264e respectively mate with the mating recessed portions 116a, 116b, 116e of the battery pack 4 when the battery pack 4 is mounted on the charger 6, thereby partially blocking off the slits 90a, 90b, 90e.

As shown in FIG. 14, the circuit board 202 is sandwiched between upper-portion support projections 224, which protrude from an inner surface of the upper-part housing 206, and lower-portion support projections 226, which protrude from an inner surface of the lower-part housing 208. The circuit board 202 is disposed along a plane orthogonal to the up-down direction. In addition, the circuit board 202 is provided with a plurality of connection terminals 228 corresponding to the plurality of device-side terminals 8.

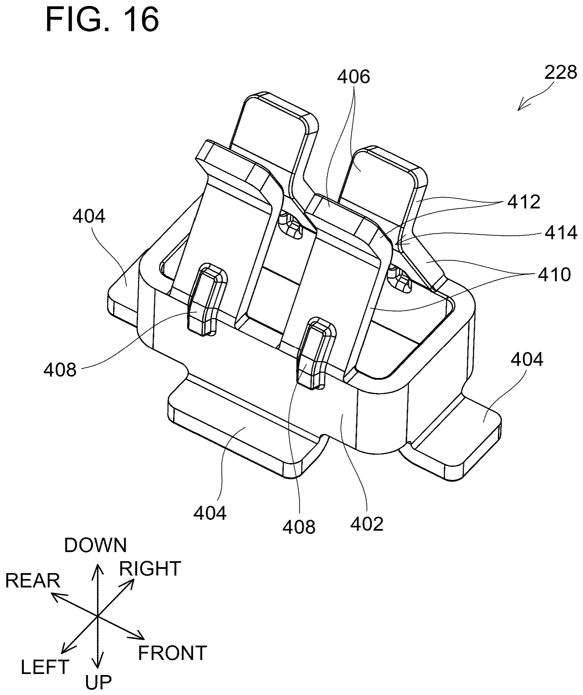

As shown in FIG. 16, each of the connection terminals 228 has: a mating portion 402, which mates with a rectangular through-hole (not shown) formed in the circuit board 202 (see FIG. 14); flat-plate portions 404, which extend in the horizontal direction from the upper end of the mating portion 402; a pair of left and right spring portions 406, which extend downward from the lower end of the mating portion 402; and protruding portions 408, which are formed spanning an outer surface of the mating portion 402 and outer surfaces of the spring portions 406. The connection terminals 228 are mounted on the circuit board 202 such that the circuit board 202 is disposed between the flat-plate portions 404 and the protruding portions 408. The flat-plate portions 404 abut an upper surface of the circuit board 202, thereby restricting (blocking) movement of the connection terminals 228 downward relative to the circuit board 202. The protruding portions 408 abut a lower surface of the circuit board 202, thereby restricting (blocking) movement of the connection terminals 228 upward relative to the circuit board 202. The spring portions 406 are so-called leaf springs and are elastically deformable in the left-right direction. The spring portions 406 have: first guide portions 410, the distance between which, in the left-right direction, becomes smaller the farther away from the base ends thereof (i.e., the mating portion 402); second guide portions 412, the distance between which, in the left-right direction, becomes smaller the farther away from the tip ends thereof; and contact portions 414 located between the first guide portions 410 and the second guide portions 412.

As shown in FIG. 14, when the device-side terminals 8 are respectively pushed into the connection terminals 228, the device-side terminals 8 push apart the first guide portions 410 (see FIG. 16) and are (elastically) pinched (clamped, squeezed) between the contact portions 414 (see FIG. 16). The device-side terminals 8 are thereby electrically connected to the circuit board 202 via the connection terminals 228.

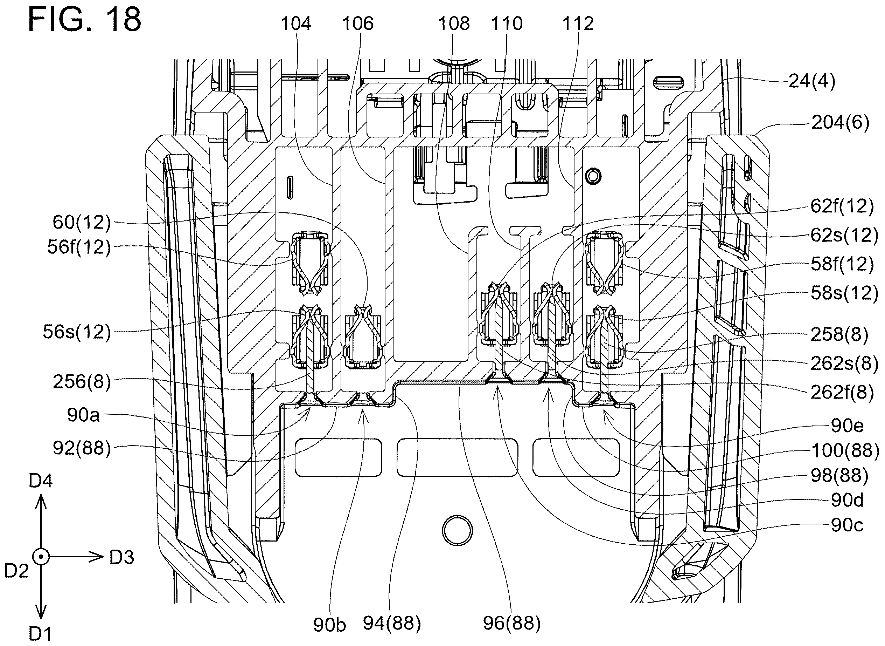

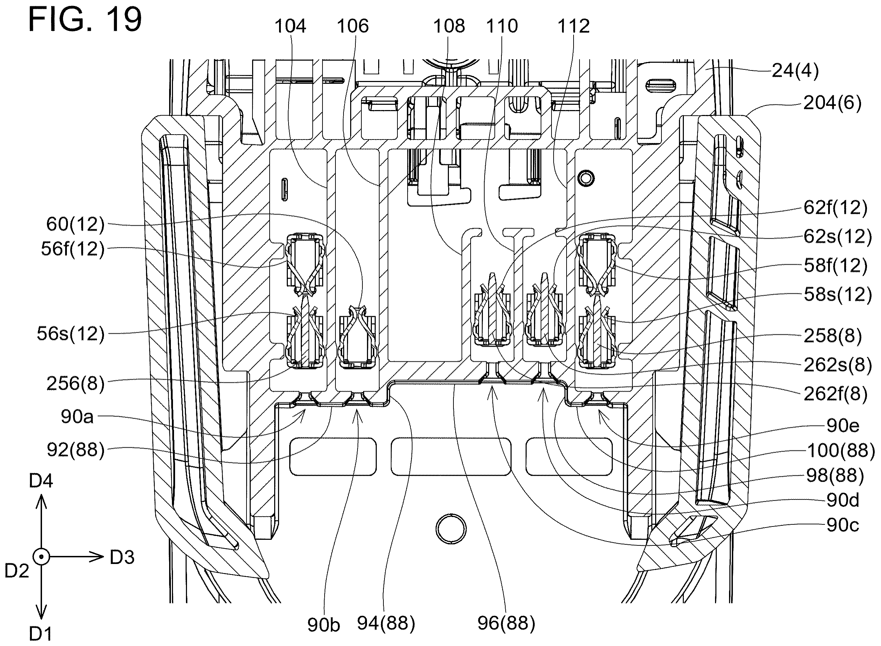

As shown in FIG. 18 and FIG. 19, the battery pack 4 is mounted on the charger 6 by sliding the battery pack 4 in first direction D1 relative to the charger 6. When mounting the battery pack 4 on the charger 6, each of the device-side terminals 8 of the charger 6 moves in fourth direction D4 relative to the outer case 24 of the battery pack 4. At this time, the device-side, positive-electrode terminal 256 passes through the slit 90a, enters the interior of the outer case 24 (more specifically, the interior of the terminals-receiving part 76), and is ultimately pinched (clamped, squeezed) by the battery-side, positive-electrode terminal 56s, thereby being electrically connected to the battery-side, positive-electrode terminal 56s. The device-side, negative-electrode terminal 258 passes through the slit 90e, enters the interior of the outer case 24, and is ultimately pinched (clamped, squeezed) by the battery-side, negative-electrode terminal 58s, thereby being electrically connected to the battery-side, negative-electrode terminal 58s. The device-side, charging-signal terminal 262f passes through the slit 90c, enters the interior of the outer case 24, and is ultimately pinched (clamped, squeezed) by the battery-side, charging-signal terminal 62f, thereby being electrically connected to the battery-side, charging-signal terminal 62f. The device-side, charging-signal terminal 262s passes through the slit 90d, enters the interior of the outer case 24, and is ultimately pinched (clamped, squeezed) by the battery-side, charging-signal terminal 62s, thereby being electrically connected to the battery-side, charging-signal terminal 62s.

As shown in FIG. 18, each of the battery-side terminals 12 of the battery pack 4 begins to contact the respective device-side terminal 8 of the charger 6 at substantially the same time (or at the same time) during the process of mounting the battery pack 4 on the charger 6. At the timing at which the battery-side terminals 12 begin to contact the device-side terminals 8, the resisting force (specifically, the force resisting the sliding of the battery pack 4 relative to the charger 6) felt by the user sliding the battery pack 4 increases. Hypothetically speaking, if the timings at which each of the battery-side terminals 12 begins to contact the respective device-side terminal 8 were to instead be different from each other, the resisting force would increase in multiple stages while the user is mounting the battery pack 4 on the charger 6. As a result, there is a risk that the user will feel annoyance owing to the user being unable to slide the battery pack 4 smoothly. In the present working example, by contrast, because the timing at which each of the battery-side terminals 12 begin to contact the respective device-side terminals 8 is at least substantially simultaneous (or simultaneous), the likelihood of an increase in the resisting force in multiple stages while the user is mounting the battery pack 4 on the charger 6 is significantly reduced. Therefore, the user is thereby able to smoothly slide the battery pack 4 onto the charger 6 with only one increase in sliding resistance.

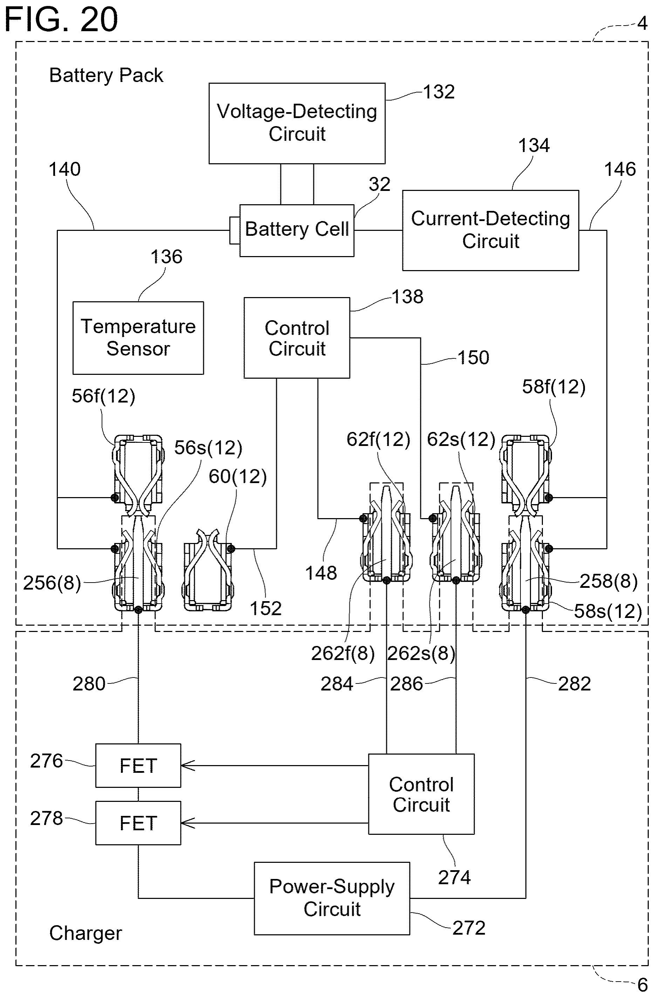

As shown in FIG. 20, the battery pack 4 comprises: a voltage-detecting circuit 132, which detects the voltages of each of the battery cells 32; a current-detecting circuit 134, which detects the currents flowing through each of the battery cells 32; a temperature sensor 136, which detects the temperature of the battery cells 32; a battery-side control circuit 138, which controls the various electrical components of the battery pack 4; a first battery-side, power-supply line 140, which electrically connects the battery cells 32 and the battery-side, positive-electrode terminals 56f, 56s; a second battery-side, power-supply line 146, which electrically connects the battery cells 32 and the battery-side, negative-electrode terminals 58f, 58s; a first battery-side signal line 148, which electrically connects the battery-side control circuit 138 and the battery-side, charging-signal terminal 62f; a second battery-side signal line 150, which electrically connects the battery-side control circuit 138 and the battery-side, charging-signal terminal 62s; and a third battery-side signal line 152, which electrically connects the battery-side control circuit 138 and the battery-side, discharging-signal terminal 60. The voltage-detecting circuit 132, the current-detecting circuit 134, the temperature sensor 136, and the battery-side control circuit 138 are each mounted on the circuit board 36 (see FIG. 6). The value detected by the voltage-detecting circuit 132, the value detected by the current-detecting circuit 134, and the value detected by the temperature sensor 136 are each input to the battery-side control circuit 138.

The charger 6 comprises: a power-supply circuit 272, which is electrically connected to an external power supply (e.g., a commercial AC power supply) by (via) the power-supply cord 212 (see FIG. 14); a device-side control circuit 274, which controls the various electrical component of the charger 6; two switch circuits 276, 278 (e.g., FETs), which turn ON/OFF upon receiving instructions from the device-side control circuit 274; a first device-side, power-supply line 280, which electrically connects the power-supply circuit 272 and the device-side, positive-electrode terminal 256; a second device-side, power-supply line 282, which electrically connects the power-supply circuit 272 and the device-side, negative-electrode terminal 258; a first device-side signal line 284, which electrically connects the device-side control circuit 274 and the device-side, charging-signal terminal 262f; and a second device-side signal line 286, which electrically connects the device-side control circuit 274 and the device-side, charging-signal terminal 262s. Each of the two switch circuits 276, 278 is provided on (in electrical communication with) the first device-side, power-supply line 280 and selectively connects and disconnects the power-supply circuit 272 and the device-side, positive-electrode terminal 256. The power-supply circuit 272, the device-side control circuit 274, and the two switch circuits 276, 278 are each mounted on the circuit board 202 (see FIG. 13).

If a value detected by the voltage-detecting circuit 132 (i.e., the voltage of any one of the battery cells 32) is equal to or greater than a first threshold (e.g., 4.0 V), then the battery-side control circuit 138 outputs, to the first battery-side signal line 148, a first charging-prohibiting signal for prohibiting charging of (conducting current to be supplied to recharge) the battery cells 32. On the other hand, if the value(s) detected by the voltage-detecting circuit 132 is (are all) less than the first threshold, then the battery-side control circuit 138 outputs, to the first battery-side signal line 148, a first charging-permitting signal for permitting charging of (conducting current to be supplied to recharge) the battery cells 32. The first charging-prohibiting signal or the first charging-permitting signal output to the first battery-side signal line 148 is input to the device-side control circuit 274 via the battery-side, charging-signal terminal 62f, the device-side, charging-signal terminal 262f, and the first device-side signal line 284. If the first charging-prohibiting signal is input to the device-side control circuit 274, then the device-side control circuit 274 switches the switch circuit 276 OFF. If the first charging-permitting signal is input to the device-side control circuit 274, then the device-side control circuit 274 switches the switch circuit 276 ON. It is noted that the first threshold is a value that varies depending on the temperature detected by the temperature sensor 136 (i.e., the temperature of the battery cells 32). For example, if the temperature detected by the temperature sensor 136 is high (e.g., higher than 20°C), then the first threshold becomes a larger value (e.g., 4.2 V). If the temperature detected by the temperature sensor 136 is low (e.g., 0°C or lower), then the first threshold becomes a smaller value (e.g., 1.0 V).

If a value detected by the voltage-detecting circuit 132 is equal to or greater than a second threshold (e.g., 4.3 V), then the battery-side control circuit 138 outputs, to the second battery-side signal line 150, a second charging-prohibiting signal for prohibiting charging of (conducting current to be supplied to recharge) the battery cells 32. On the other hand, if the value(s) detected by the voltage-detecting circuit 132 is (are all) less than the second threshold, then the battery-side control circuit 138 outputs, to the second battery-side signal line 150, a second charging-permitting signal for permitting charging of (conducting current to be supplied to recharge) the battery cells 32. The second charging-prohibiting signal or the second charging-permitting signal that is output to the second battery-side signal line 150 is input to the device-side control circuit 274 via the battery-side, charging-signal terminal 62s, the device-side, charging-signal terminal 262s, and the second device-side signal line 286. If the second charging-prohibiting signal is input to the device-side control circuit 274, then the device-side control circuit 274 switches the switch circuit 278 OFF. If the second charging-permitting signal is input to the device-side control circuit 274, then the device-side control circuit 274 switches the switch circuit 278 ON. It is noted that the second threshold is a value not dependent on the temperature detected by the temperature sensor 136.

If the two switch circuits 276, 278 are both turned ON, then charging (conducting current) from the power-supply circuit 272 to the battery cells 32 is permitted, and charging (conducting current) from the power-supply circuit 272 to the battery cells 32 is performed. If at least one of the two switch circuits 276, 278 is turned OFF, then charging (conducting current) from the power-supply circuit 272 to the battery cells 32 is prohibited, and charging (conducting current) from the power-supply circuit 272 to the battery cells 32 is not performed.

### Configuration of Electric Work Machine 16

As shown in FIG. 3, the electric work machine 16 comprises a battery-mounting part 302 for mounting the battery pack 4. The battery-mounting part 302 comprises the slide rails 304, the engaging groove 306, and a terminal block 308, which is provided with the plurality of device-side terminals 18. The slide rails 304 engage with the slide rails 74 of the battery pack 4 (see FIG. 10) in a slidable manner, similarly to the slide rails 216 of the charger 6 (see FIG. 1). The protruding portion 118 of the hook 78 provided on the battery pack 4 (see FIG. 10) engages with the engaging groove 306, similarly to the engaging groove 218 of the charger 6 (see FIG. 1).

The terminal block 308 has the terminal-mounting surface 20, from which the device-side terminals 18 protrude, and a housing part 310, which houses some of the device-side terminals 18, wiring (not shown) for connecting to the device-side terminals 18, and the like. The terminal-mounting surface 20 is located in fourth direction D4 as viewed from (relative to) the housing part 310; i.e. the terminal-mounting surface 20 is located forward of the housing part 310.

Each of the device-side terminals 18 has a sheet shape (rib shape, fin shape) that is (extends) parallel to first direction D1 and second direction D2 in the portions thereof that are exposed to the exterior of the terminal block 308. Each of the device-side terminals 18 comprises: the device-side, positive-electrode terminal 356, which is used for discharging (conducting relatively large currents) from the battery pack 4 to the electric work machine 16; the device-side, negative-electrode terminal 358, which is used for discharging (conducting relatively large currents) from the battery pack 4 to the electric work machine 16; and the device-side, discharging-signal terminal 360, which is used for signal communication (conducting relatively low-current electric signals) between the battery pack 4 and the electric work machine 16.

The terminal block 308 further has the plurality of mating protruding portions 364a, 364e protruding upward from the terminal-mounting surface 20. The mating protruding portion 364a is disposed such that it contacts (and surrounds) the device-side, positive-electrode terminal 356. The mating protruding portion 364e is disposed such that it contacts (and surrounds) the device-side, negative-electrode terminal 358. When the battery pack 4 is mounted on the electric work machine 16, the mating protruding portions 364a, 364e respectively mate with the mating recessed portions 116a, 116e of the battery pack 4, thereby partially blocking off the slits 90a, 90e.

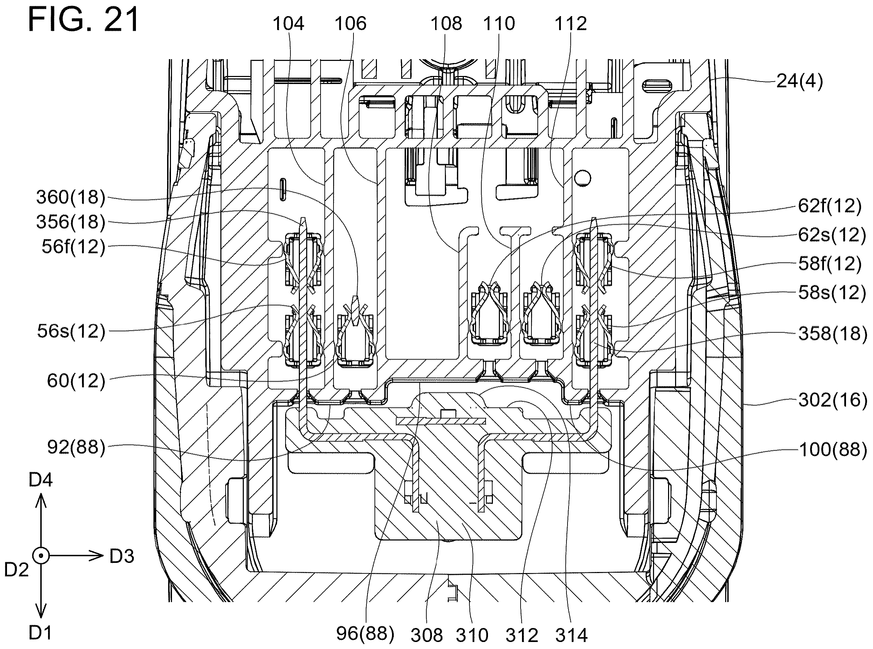

As shown in FIG. 21, the battery pack 4 is mounted on the electric work machine 16 by sliding the battery pack 4 in first direction D1 relative to the electric work machine 16. When mounting the battery pack 4 on the electric work machine 16, each of the device-side terminals 18 of the electric work machine 16 moves in fourth direction D4 relative to the outer case 24 of the battery pack 4. At this time, the device-side, positive-electrode terminal 356 passes through the slit 90a, enters the interior of the outer case 24 (more specifically, the interior of the terminals-receiving part 76), and is ultimately pinched (clamped, squeezed) by the battery-side, positive-electrode terminals 56f, 56s, thereby being electrically connected to the battery-side, positive-electrode terminals 56f, 56s. The device-side, negative-electrode terminal 358 passes through the slit 90e, enters the interior of the outer case 24, and is ultimately pinched (clamped, squeezed) by the battery-side, negative-electrode terminals 58f, 58s, thereby being electrically connected to the battery-side, negative-electrode terminals 58f, 58s. The device-side, discharging-signal terminal 360 passes through the slit 90b, enters the interior of the outer case 24, and is ultimately pinched (clamped, squeezed) by the battery-side, discharging-signal terminal 60, thereby being electrically connected to the battery-side, discharging-signal terminal 60.

When the battery pack 4 is mounted on the battery-mounting part 302, an end surface 312, which faces the housing part 310 of the terminal block 308 in fourth direction D4, opposes the standing wall 88 of the battery pack 4. The housing part 310 has a raised portion 314, which rises from the end surface 312 in fourth direction D4, at a location opposing the second flat-wall portion 96 of the standing wall 88. Hypothetically speaking, if the second flat-wall portion 96 were to instead be flush with the first flat-wall portion 92 and the third flat-wall portion 100, then, if an attempt were to be made to mount the battery pack 4 on the electric work machine 16, the raised portion 314 would interfere with (i.e., make contact with and thereby block) the standing wall 88. For this reason, the battery pack 4 would not be mountable on the electric work machine 16. In the present working example, by contrast, the portion of the standing wall 88 that contacts the second flat-wall portion 96 is recessed in fourth direction D4, and thereby interference of the raised portion 314 with the standing wall 88 can be avoided. For this reason, the battery pack 4 is mountable on the electric work machine 16.

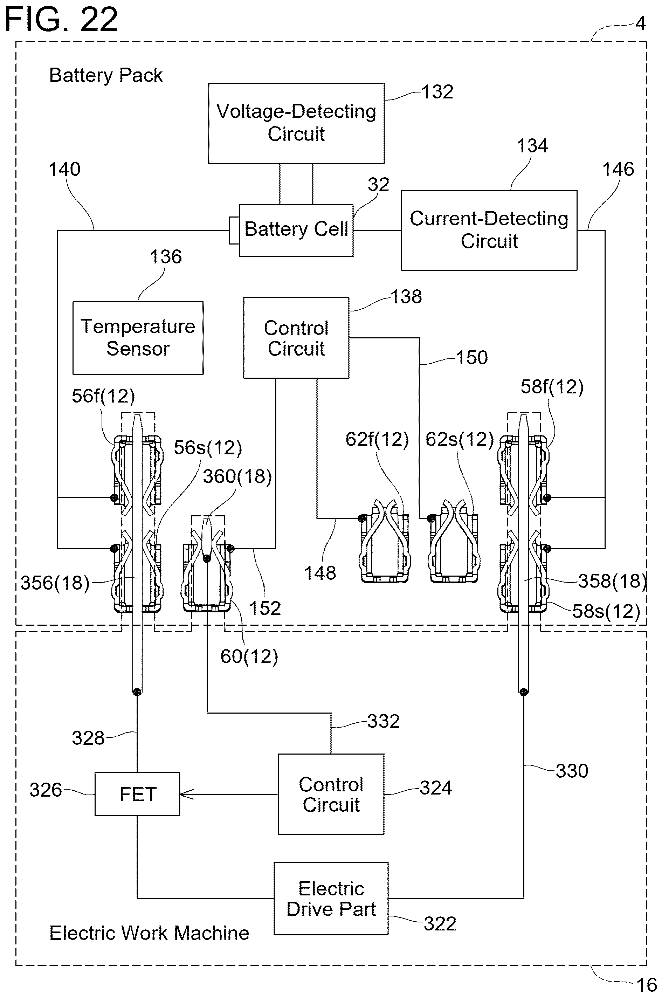

As shown in FIG. 22, the electric work machine 16 comprises: an electric drive part 322 (for example, an electric motor or another electrically-drivable component, such as a heater, a radio, a light, etc.) actuated (driven, energized) by an electric power supply; a device-side control circuit 324 that controls the various electronic components of the electric work machine 16; a switch circuit 326 (e.g., (an) FET(s)) that turns ON/OFF upon receiving instructions from the device-side control circuit 324; a first device-side, power-supply line 328 that electrically connects the electric drive part 322 and the device-side, positive-electrode terminal 356; a second device-side, power-supply line 330 that electrically connects the electric drive part 322 and the device-side, negative-electrode terminal 358; and a device-side signal line 332 that electrically connects the device-side control circuit 324 and the device-side, discharging-signal terminal 360. The switch circuit 326 is provided on the first device-side, power-supply line 328 and selectively connects and disconnects the electric drive part 322 and the device-side, positive-electrode terminal 356.

If a prescribed discharging-permitting condition is met, then the battery-side control circuit 138 outputs, to the third battery-side signal line 152, a discharging-permitting signal for permitting discharging (conducting current) from the battery cells 32 (e.g., to energize the electronic components of the electric work machine 16, such as the electronic drive part 322, etc.). The discharging-permitting conditions include, for example: the value detected by the voltage-detecting circuit 132 (i.e., the voltage of the battery cells 32) being equal to or greater than a prescribed value; the value detected by the current-detecting circuit 134 (i.e., the current flowing through each of the battery cells 32) being equal to or less than a prescribed value; and/or the temperature detected by the temperature sensor 136 being equal to or less than a prescribed value. On the other hand, if a prescribed discharging-prohibiting condition is met, then the battery-side control circuit 138 outputs, to the third battery-side signal line 152, a discharging-prohibiting signal for prohibiting discharging (conducting current) from the battery cells 32. The discharging-prohibiting conditions include, for example: the value detected by the voltage-detecting circuit 132 (i.e., the voltage of the battery cells 32) being less than a prescribed value; the value detected by the current-detecting circuit 134 (i.e., the current flowing through each of the battery cells 32) exceeding a prescribed value; and/or the temperature detected by the temperature sensor 136 exceeding a prescribed value.

The discharging-permitting signal or the discharging-prohibiting signal that is output to the third battery-side signal line 152 is input to the device-side control circuit 324 via the battery-side, discharging-signal terminal 60, the device-side, discharging-signal terminal 360, and the device-side signal line 332. If the discharging-permitting signal is input to the device-side control circuit 324, then the device-side control circuit 324 switches the switch circuit 326 ON. If the switch circuit 326 is turned ON, then discharging (conducting current) from the battery cells 32 to the electric drive part 322 is permitted and operation of the electric drive part 322 is permitted. If the discharging-prohibiting signal is input to the device-side control circuit 324, then the device-side control circuit 324 switches the switch circuit 326 OFF. If the switch circuit 326 is turned OFF, then discharging (conducting current) from the battery cells 32 to the electric drive part 322 is prohibited and operation of the electric drive part 322 is prohibited.

### Modified Examples

The arrangement of the battery-side terminals 12 in the battery pack 4 shown, e.g., in FIGS. 9 and 11, may be modified. For example, the location of the battery-side, positive-electrode terminals 56f, 56s and the location of the battery-side, discharging-signal terminal 60 may be switched. In such a modified embodiment, the slit 90a may receive the device-side terminal corresponding to the battery-side, discharging-signal terminal 60, and the slit 90b may receive the device-side terminals corresponding to the battery-side, positive-electrode terminals 56f, 56s. Alternatively, the location of the battery-side, negative-electrode terminals 58f, 58s and the location of the battery-side, charging-signal terminal 62s may be switched. In such a modified embodiment, the slit 90d may receive the device-side terminals corresponding to the battery-side, negative-electrode terminals 58f, 58s, and the slit 90e may receive the device-side terminal corresponding to the battery-side, charging-signal terminal 62s. Alternatively, the battery-side, discharging-signal terminal 60 may be lined up with the battery-side, charging-signal terminal 62f (or the battery-side, charging-signal terminal 62s) in the front-rear direction (i.e., in first direction D1 and fourth direction D4). In such a modified embodiment, one slit may receive both the device-side terminal corresponding to the battery-side, discharging-signal terminal 60 and the device-side terminal corresponding to the battery-side, charging-signal terminal 62f (or the battery-side, charging-signal terminal 62s). Alternatively, the battery-side, charging-signal terminals 62f, 62s may be lined up in the front-rear direction (i.e., in first direction D1 and fourth direction D4) of the battery pack 4. In such a modified embodiment, one slit may receive the two device-side terminals respectively corresponding to the battery-side, charging-signal terminals 62f, 62s.

The arrangement of the device-side terminals 8 and the device-side terminals 18 may be modified in accordance with the above-described modified arrangements of the battery-side terminals 12.

The battery pack 4 need not comprise one of the battery-side, charging-signal terminals 62f, 62s, as shown, e.g., in FIG. 20. In such a modified embodiment, there may be only one communication path between the battery pack 4 and the charger 6.

Referring to FIG. 9, the respective rear-end locations of the battery-side, charging-signal terminals 62f, 62s may be disposed on sixth virtual axis A6 rather than on seventh virtual axis A7. That is, the respective rear-end locations of the battery-side, charging-signal terminals 62f, 62s may be aligned with the rear-end location of the battery-side, positive-electrode terminal 56s, the rear-end location of the battery-side, discharging-signal terminal 60, and the rear-end location of the battery-side, negative-electrode terminal 58s.

In addition to the mating recessed portions 116a, 116b, 116e as shown, e.g., in FIGS. 10 and 11, the battery pack 4 may further include a recessed portion formed by recessing the upper surface of the front-side flat wall 84 downward around the slit 90c, and/or a recessed portion formed by recessing the upper surface of the front-side flat wall 84 downward around the slit 90d. In such a modified embodiment, the charger 6 may further include protruding portions that mate with the above-mentioned recessed portion added to the battery pack 4. In other words, protruding portions that contact the device-side, charging-signal terminals 262f, 262s may be further provided on the terminal-mounting surface 10 of the charger 6.

The charger 6 need not have at least one of the mating protruding portions 264a, 264b, 264e, as shown, e.g., in FIGS. 1 and 17. In such a modified embodiment, the battery pack 4 need not have at least one of the mating recessed portions 116a, 116b, 116e corresponding to the at least one of the (omitted) mating protruding portions 264a, 264b, 264e.

Referring to FIG. 9, second distance d2 (i.e., the spacing between the battery-side, discharging-signal terminal 60 and the battery-side, charging-signal terminal 62f) may be equal to each of first distance d1, third distance d3, and fourth distance d4 (i.e., the spacings between the other terminals).

Referring to FIGS. 1 and 17, the arrangement of the device-side terminals 8 on the charger 6 may be modified. For example, each of the two device-side, charging-signal terminals 262f, 262s may be disposed in space SR, which is on the right side of virtual plane P2 that bisects, in the left-right direction, the area between the device-side, positive-electrode terminal 256 and the device-side, negative-electrode terminal 258. In addition, the locations of the end portions (ends, edges) of each of the two device-side, charging-signal terminals 262f, 262s in fourth direction D4 may be disposed on eighth virtual axis A8 rather than on ninth virtual axis A9. That is, the locations of the end portions of the two device-side, charging-signal terminals 262f, 262s in fourth direction D4 may be aligned with the location of the end portion of the device-side, positive-electrode terminal 256 in fourth direction D4 and the location of the end portion of the device-side, negative-electrode terminal 258 in fourth direction D4, respectively. Alternatively, the locations of the two device-side, charging-signal terminals 262f, 262s in fourth direction D4 may be offset in first direction D1 with respect to the location of end portion of the device-side, positive-electrode terminal 256 in fourth direction D4 and the location of the end portion of the device-side, negative-electrode terminal 258 in fourth direction D4, respectively.

Furthermore, the charger 6 may comprise three or more device-side, charging-signal terminals. Two of the three or more device-side, charging-signal terminals may be disposed on one side of the space partitioned by virtual plane P2 (i.e., in one of space SL or space SR).

The arrangement of the battery-side terminals 12 and the device-side terminals 18 may be modified in accordance with the above-described modified arrangement of the device-side terminals 8.

### Features of the Working Example

The battery pack 4 of the above-described working example is mountable on the electric work machine 16 (example of an "electronic device" according to the present teachings) or the charger 6, which each have the terminal-mounting surface 10, 20 from which the sheet-shaped, device-side terminals 8, 18 protrude, by sliding the battery pack 4 in first direction D1 parallel to the terminal-mounting surface 10, 20. The battery pack 4 comprises: the battery cells 32; the battery-side terminals 12, which electrically connect to the device-side terminals 8, 18 by pinching the device-side terminals 8, 18 in a direction orthogonal to first direction D1; the circuit board 36, which is electrically connected to both the battery cells 32 and the plurality of battery-side terminals 12; and the outer case 24, which houses the battery cells 32, the circuit board 36, and the plurality of battery-side terminals 12. Assuming that a direction that is orthogonal to first direction D1 and is the direction from the battery pack 4 toward the terminal-mounting surface 10, 20 (of the electronic work machine 16 or charger 6 when the battery pack 4 is mounted thereon) is defined as second direction D2, the outer case 24 comprises: the standing wall 88 (example of a "first wall" according to the present teachings) disposed in first direction D1, as viewed from (relative to) the plurality of battery-side terminals 12; the front-side flat wall 84 (example of a "second wall" according to the present teachings) disposed in second direction D2, as viewed from (relative to) the plurality of battery-side terminals 12, and connected to the standing wall 88; and the slits 90a, 90b, 90c, 90d, 90e, which are formed spanning the standing wall 88 and the front-side flat wall 84 and respectively receive the device-side terminals 8, 18 in the interior of the outer case 24. The standing wall 88 has: the first flat-wall portions 92, in which is formed the first slit group 90a, 90b, which includes at least one of the slits 90a, 90b, 90c, 90d, 90e; and the second flat-wall portions 96, which is adjacent to the first flat-wall portion 92 in third direction D3 that is orthogonal to both first direction D1 and second direction D2 and in which is formed the second slit group 90c, 90d, which includes at least one of the slits 90a, 90b, 90c, 90d, 90e. The second flat-wall portions 96 are offset from the first flat-wall portions 92 in fourth direction D4 that is opposite of first direction D1.

Hypothetically speaking, if the standing wall 88 were to instead be flush (i.e. entirely flat between the slide rails 74), an empty space might be formed in fourth direction D4 (i.e., the direction in which the inner surface of the standing wall 88 faces) as viewed from (relative to) at least a portion of the standing wall 88. On the other hand, according to the above-described configuration of the working example, a portion of the standing wall 88 can be offset in fourth direction D4 (i.e., the direction in which the inner surface of the standing wall 88 faces) so as to reduce this empty space. The external dimensions of the outer case 24 can thereby be made more compact by the amount that the empty space is reduced, compared with an embodiment in which the standing wall 88 is flush (flat across its entire length in the left-right direction (third direction D3)).

In the above-described working example, the plurality of battery-side terminals 12 includes: the battery-side, positive-electrode terminals 56f, 56s (examples of a "positive-electrode terminal" according to the present teachings) and the battery-side, negative-electrode terminals 58f, 58s (examples of a "negative-electrode terminal" according to the present teachings) for discharging (conducting current) from the battery cells 32 to the electric work machine 16 or charging from the charger 6 to the battery cells 32; the battery-side, discharging-signal terminal 60 (example of a "discharging-signal terminal" according to the present teachings) for signal communication (conducting electric signals) between the electric work machine 16 and the circuit board 36; and the battery-side, charging-signal terminals 62f, 62s (examples of a "charging-signal terminal" according to the present teachings) for signal communication (conducting electric signals) between the charger 6 and the circuit board 36. The battery-side, positive-electrode terminals 56f, 56s, the battery-side, negative-electrode terminals 58f, 58s, the battery-side, discharging-signal terminal 60, and the battery-side, charging-signal terminals 62f, 62s are disposed spaced apart from each other in third direction D3. The plurality of slits 90a, 90b, 90c, 90d, 90e includes: the slit 90a (example of a "positive-electrode slit" according to the present teachings), which receives the device-side, positive-electrode terminals 256, 356 (examples of a "device-side terminal corresponding to a positive-electrode terminal" according to the present teachings); the slit 90e (example of a "negative-electrode slit" according to the present teachings), which receives the device-side, negative-electrode terminals 258, 358 (examples of a "device-side terminal corresponding to a negative-electrode terminal" according to the present teachings); the slit 90b (example of a "discharging-signal slit" according to the present teachings), which receives the device-side, discharging-signal terminal 360 (example of a "device-side terminal corresponding to a discharging-signal terminal" according to the present teachings); and the slits 90c, 90d (examples of a "charging-signal slit" according to the present teachings), which receive the device-side, charging-signal terminals 262f, 262s (examples of a "device-side terminal corresponding to a charging-signal terminal" according to the present teachings).

According to the above-mentioned configuration, one slit is provided for each type of battery-side terminal 12; thus, the number of slits provided in the outer case 24 becomes large. Because the external dimensions of the outer case 24 tend to increase to the extent that the number of slits becomes large, the effect of making the external dimensions of the outer case 24 more compact due to offsetting a portion of the first wall in the fourth direction relative to the first flat-wall portion is remarkably exhibited.

In the above-described working example, the first slit group 90a, 90b includes at least one of the slit 90a, the slit 90e, and the slit 90b. The second slit group 90c, 90d includes the slits 90c, 90d.

As was explained above, the sizes of the battery-side, charging-signal terminals 62f, 62s, through which a large electrical current does not flow, are sometimes designed to be smaller than the sizes of the battery-side, positive-electrode terminals 56f, 56s (or the battery-side, negative-electrode terminals 58f, 58s), through which a large electrical current for charging or discharging flows. In such an embodiment, although no empty space is formed in the vicinity of the portion of the standing wall 88 opposing the battery-side, positive-electrode terminals 56f, 56s (or the battery-side, negative-electrode terminals 58f, 58s), an empty space might be formed in the vicinity of the portion of the standing wall 88 that opposes (faces) the battery-side, charging-signal terminals 62f, 62s. According to the above-mentioned configuration, the second flat-wall portions 96 (i.e., the portion of the standing wall 88 opposing the battery-side, charging-signal terminals 62f, 62s), in which the slits 90c, 90d are formed, are offset in fourth direction D4 (i.e., the direction in which an inner surface of the standing wall 88 faces) so as to reduce the empty space in the vicinity thereof. The external dimensions of the outer case 24 can thereby be made more compact to the extent that the empty space is reduced.

In the above-described working example, the battery-side, charging-signal terminals 62f, 62s include the battery-side, charging-signal terminal 62f (example of a "first charging-signal terminal" according to the present teachings) and the battery-side, charging-signal terminal 62s (example of a "second charging-signal terminal" according to the present teachings), which is offset in third direction D3 relative to the battery-side, charging-signal terminal 62f. The slits 90c, 90d include the slit 90c (example of a "first charging-signal slit" according to the present teachings), which receives the device-side, charging-signal terminal 262f, and the slit 90d (example of a "second charging-signal slit" according to the present teachings), which receives the device-side, charging-signal terminal 262s.

According to the above-mentioned configuration, a plurality of communication paths, which include the communication path via the battery-side, charging-signal terminal 62f and the communication path via the battery-side, charging-signal terminal 62s, can be established between the charger 6 and the circuit board 36.

In the above-described working example, the plurality of battery-side terminals 12 includes: the reference terminals 56s, 60 located in fourth direction D4 as viewed from (relative to) the first flat-wall portions 92; and the offset terminals 62f, 62s located in fourth direction D4 as viewed from (relative to) the second flat-wall portions 96. The locations (A7) of the end portions (ends, edges) of the offset terminals 62f, 62s in first direction D1 are offset (spaced apart) in fourth direction D4 relative to the locations (A6) of the end portions (ends, edges) of the reference terminals 56s, 60 in first direction D1.

According to the above-mentioned configuration, a space is formed in first direction D1, as viewed from (relative to) the offset terminals 62f, 62s, to the extent that the offset terminals 62f, 62s are offset in fourth direction D4 relative to the reference terminals 56s, 60. In addition, the second flat-wall portion 96 is offset in fourth direction D4 such that the second flat-wall portion 96 is disposed in this space. The external dimensions of the outer case 24 can thereby be made more compact.

In the above-described working example, the reference terminal 56s functions as (is) the battery-side, positive-electrode terminal 56s for discharging (conducting current) from the battery cells 32 to the electric work machine 16 or the battery-side, positive-electrode terminal 56s for charging (conducting current) from the charger 6 to the battery cells 32. The reference terminal 60 functions as (is) the battery-side, discharging-signal terminal 60 for signal communication (conducting electric signals) between the electric work machine 16 and the circuit board 36. The offset terminals 62f, 62s function as (are) the battery-side, charging-signal terminals 62f, 62s for signal communication (conducting electric signals) between the charger 6 and the circuit board 36.

As was explained above, the sizes of the battery-side, charging-signal terminals 62f, 62s, through which a large electrical current does not flow, are sometimes designed to be smaller than the sizes of the battery-side, positive-electrode terminal 56s, through which a large electrical current for charging or discharging flows. According to the above-mentioned configuration, it is possible to dispose the large-sized, battery-side, positive-electrode terminal 56s in the space in fourth direction D4 as viewed from (relative to) the first flat-wall portions 92 (i.e., a comparatively large space), and to dispose the small-sized, battery-side, charging-signal terminals 62f, 62s in the space in fourth direction D4 as viewed from (relative to) the second flat-wall portions 96 (i.e., a relatively small space). It is thereby possible to keep electrical components from being densely or sparsely disposed in the interior of the outer case 24.

In additional aspects of the battery pack 4 of the present working example, it is again noted that the battery pack 4 is mountable on the electric work machine 16 or the charger 6, which each have the terminal-mounting surface 10, 20 from which the sheet-shaped, device-side terminals 8, 18 protrude, by sliding the battery pack 4 in first direction D1 parallel to the terminal-mounting surface 10, 20. In this aspect as well, the battery pack 4 comprises: the battery cells 32; the battery-side terminals 12, which electrically connect to the device-side terminals 8, 18 by pinching the device-side terminals 8, 18 in a direction orthogonal to first direction D1; the circuit board 36, which is electrically connected to both the battery cells 32 and the plurality of battery-side terminals 12; and the outer case 24, which houses the battery cells 32, the circuit board 36, and the plurality of battery-side terminals 12. The outer case 24 has the slits 90a, 90b, 90c, 90d, 90e, which are formed in the outer surface of the outer case 24 and respectively receive the device-side terminals 8, 18 in the interior of the outer case 24. The plurality of battery-side terminals 12 includes: the battery-side, positive-electrode terminals 56f, 56s and the battery-side, negative-electrode terminals 58f, 58s for discharging (conducting current) from the battery cells 32 to the electric work machine 16 or charging (conducting current) from the charger 6 to the battery cells 32; the battery-side, discharging-signal terminal 60 for signal communication (conducting electric signals) between the electric work machine 16 and the circuit board 36; and the battery-side, charging-signal terminals 62f, 62s for signal communication (conducting electric signals) between the charger 6 and the circuit board 36. Assuming that a direction that is orthogonal to first direction D1 and is the direction from the battery pack 4 toward the terminal-mounting surface 10, 20 is defined as second direction D2, the battery-side, positive-electrode terminals 56f, 56s, the battery-side, negative-electrode terminals 58f, 58s, the battery-side, discharging-signal terminal 60, and the battery-side, charging-signal terminals 62f, 62s are disposed spaced apart from each other in third direction D3, which is orthogonal to both first direction D1 and second direction D2. The locations (A6) of the end portions (ends, edges) of the battery-side, positive-electrode terminals 56f, 56s in first direction D1 and the locations (A6) of the end portions (ends, edges) of the battery-side, negative-electrode terminals 58f, 58s in first direction D1 are aligned with each other in first direction D1. At least one of the location (A6) of the end portion of the battery-side, discharging-signal terminal 60 in first direction D1 and the locations (A7) of the end portions of the battery-side, charging-signal terminals 62f, 62s in first direction D1 is offset, in fourth direction D4 opposite first direction D1, relative to the locations (A6) of the end portions of the battery-side, positive-electrode terminals 56f, 56s in first direction D1 and the locations (A6) of the end portions of the battery-side, negative-electrode terminals 58f, 58s in first direction D1, respectively.

According to the above-mentioned configuration, the locations (A7) of the end portion of the battery-side, discharging-signal terminal 60 and/or the end portions of the battery-side, charging-signal terminals 62f, 62s in first direction D1 are offset in fourth direction D4 relative to the locations (A6) of the end portions of the battery-side, positive-electrode terminals 56f, 56s and the battery-side, negative-electrode terminals 58f, 58s in first direction D1. It is thereby possible to form a space in first direction D1 as viewed from (relative to) the battery-side, discharging-signal terminal 60 and/or the battery-side, charging-signal terminals 62f, 62s. It is possible, for example, to dispose electrical components, dispose wires connecting electrical components, or dispose one portion of the outer case 24 in this space.

In one or more embodiments, the locations (A6) of the end portions of the battery-side, positive-electrode terminals 56f, 56s in first direction D1, the locations (A6) of the end portions of the battery-side, negative-electrode terminals 58f, 58s in first direction D1, and the location (A6) of the end portion of the battery-side, discharging-signal terminal 60 in first direction D1 are aligned with each other in first direction D1. The locations (A7) of the end portions of the battery-side, charging-signal terminals 62f, 62s in first direction D1 are offset in fourth direction D4 relative to the locations (A6) of the end portions of the battery-side, positive-electrode terminals 56f, 56s in first direction D1, the locations (A6) of the end portions of the battery-side, negative-electrode terminals 58f, 58s in first direction D1, and the location (A6) of the end portion of the battery-side, discharging-signal terminal 60 in first direction D1.

According to the above-mentioned configuration, the locations (A7) of the end portions of the battery-side, charging-signal terminals 62f, 62s in first direction D1 are offset in fourth direction D4 relative to the locations (A6) of the end portions of the battery-side, positive-electrode terminals 56f, 56s, the battery-side, negative-electrode terminals 58f, 58s, and the battery-side, discharging-signal terminal 60 in first direction D1. It is thereby possible to form a space in first direction D1 as viewed from (relative to) the battery-side, charging-signal terminals 62f, 62s. It is therefore possible, for example, to dispose electrical components, dispose wires connecting electrical components, or dispose one portion of the outer case 24 in this space.

In one or more embodiments, the battery-side, charging-signal terminals 62f, 62s include the battery-side, charging-signal terminal 62f (example of a "first charging-signal terminal" according to the present teachings) and the battery-side, charging-signal terminal 62s (example of a "second charging-signal terminal" according to the present teachings), which is offset in third direction D3 relative to the battery-side, charging-signal terminal 62f. The location (A7) of the end portion of the battery-side, charging-signal terminal 62f in first direction D1 and the location (A7) of the end portion of the battery-side, charging-signal terminal 62s in first direction D1 are aligned with each other in first direction D1.

According to the above-mentioned configuration, a plurality of communication paths, which include the communication path via the battery-side, charging-signal terminal 62f and the communication path via the battery-side, charging-signal terminal 62s, can be established between the charger 6 and the circuit board 36.

The charging system 2 of the present working example comprises the charger 6, which has the terminal-mounting surface 10 from which the sheet-shaped, device-side terminals 8 protrude, and the battery pack 4, which is mounted on the charger 6 by sliding the battery pack 4 in first direction D1 parallel to the terminal-mounting surface 10. The battery pack 4 comprises: the battery cells 32; the battery-side terminals 12, which electrically connect to the device-side terminals 8 by pinching the device-side terminals 8 in a direction orthogonal to the first direction D1; the circuit board 36, which is electrically connected to both the battery cells 32 and the plurality of battery-side terminals 12; and the outer case 24, which houses the battery cells 32, the circuit board 36, and the plurality of battery-side terminals 12. Assuming that a direction that is orthogonal to first direction D1 and is the direction from the battery pack 4 toward the terminal-mounting surface 10 is defined as second direction D2, the outer case 24 comprises: the standing wall 88 disposed in first direction D1 as viewed from (relative to) the plurality of battery-side terminals 12; the front-side flat wall 84 disposed in second direction D2, as viewed from (relative to) the plurality of battery-side terminals 12, and connected to the standing wall 88; and the slits 90a, 90b, 90c, 90d, 90e, which are formed spanning the standing wall 88 and the front-side flat wall 84 and respectively receive the device-side terminals 8 in the interior of the outer case 24. The plurality of battery-side terminals 12 includes: the battery-side, positive-electrode terminals 56f, 56s and the battery-side, negative-electrode terminals 58f, 58s for discharging (conducting current) from the battery cells 32 to the electric work machine 16 (example of prescribed electronic device) or charging (conducting current) from the charger 6 to the battery cells 32; the battery-side, discharging-signal terminal 60 for signal communication (conducting electric signals) between the electric work machine 16 and the circuit board 36; and the battery-side, charging-signal terminals 62f, 62s for signal communication (conducting electric signals) between the charger 6 and the circuit board 36. The battery-side, positive-electrode terminals 56f, 56s, the battery-side, negative-electrode terminals 58f, 58s, the battery-side, discharging-signal terminal 60, and the battery-side, charging-signal terminals 62f, 62s are disposed spaced apart from each other in third direction D3, which is orthogonal to both first direction D1 and second direction D2. The plurality of slits 90a, 90b, 90c, 90d, 90e includes: the slit 90a, which receives the device-side, positive-electrode terminals 256, 356; the slit 90e, which receives the device-side, negative-electrode terminals 258, 358; the slit 90b, which receives the device-side, discharging-signal terminal 360; and the slits 90c, 90d, which respectively receive the device-side, charging-signal terminals 262f, 262s. The outer case 24 further has the mating recessed portion 116b, which is formed by recessing the front-side flat wall 84 around the slit 90b. The charger 6 further has the mating protruding portion 264b, which mates with the mating recessed portion 116b when the battery pack 4 is mounted on the charger 6.

According to the above-described configuration, when the battery pack 4 is mounted on the charger 6, the device-side terminals 8 of the charger 6 at least partially block off the slit 90a, the slit 90e, and the slits 90c, 90d by entering into the slit 90a, the slit 90e, and the slits 90c, 90d, respectively. The ingress of foreign matter (e.g., dust) into the interior of the outer case 24 via the slit 90a, the slit 90e, and the slits 90c, 90d is thereby impeded and curtailed. Furthermore, according to the above-described configuration, the mating protruding portion 264b of the charger 6 at least partially blocks off the slit 90b by mating with the mating recessed portion 116b. The ingress of foreign matter (e.g., dust) into the interior of the outer case 24 via the slit 90b is thereby impeded and curtailed.

In one or more embodiments, the mating protruding portion 264b is disposed so as not to contact the device-side terminals 8 on the terminal-mounting surface 10.

Hypothetically speaking, if the mating protruding portion 264b were to instead be disposed so as to contact the device-side terminals 8, then the presence of the mating protruding portion 264b would become difficult for the user to perceive. If the user does not perceive the presence of the mating protruding portion 264b, then there is a possibility that the user might attempt to mount, on the charger 6a, a battery pack incapable of avoiding the mating protruding portion 264b (i.e., a battery pack not having the mating recessed portion 116b) (not shown). In this situation, because the mating protruding portion 264b interferes with (blocks) the battery pack, the battery pack cannot be mounted on the charger 6, and therefore there is a risk that this may annoy the user. According to the above-described configuration, because the mating protruding portion 264b is disposed so as not to contact the device-side terminals 8, the presence of the mating protruding portion 264b is easy for the user to perceive. As such, the user can perceive the presence of the mating protruding portion 264b even without attempting to mount, on the charger 6, a battery pack incapable of avoiding the mating protruding portion 264b (i.e., a battery pack not having the mating recessed portion 116b).

In an additional aspect of the battery pack 4 of the present working example, the battery pack 4 is again mountable on the electric work machine 16 or the charger 6, which has the terminal-mounting surface 10, 20 from which the sheet-shaped, device-side terminals 8, 18 protrude, by sliding the battery pack 4 in first direction D1 parallel to the terminal-mounting surface 10, 20. The battery pack 4 comprises: the battery cells 32; the battery-side terminals 12, which electrically connect to the device-side terminals 8, 18 by pinching the device-side terminals 8, 18 in a direction orthogonal to first direction D1; the circuit board 36, which is electrically connected to both the battery cells 32 and the plurality of battery-side terminals 12; and the outer case 24, which houses the battery cells 32, the circuit board 36, and the plurality of battery-side terminals 12. Assuming that a direction that is orthogonal to first direction D1 and is the direction from the battery pack 4 toward the terminal-mounting surface 10, 20 is defined as second direction D2, the outer case 24 comprises: the standing wall 88 disposed in first direction D1, as viewed from (relative to) the plurality of battery-side terminals 12; the front-side flat wall 84 disposed in second direction D2, as viewed from (relative to) the plurality of battery-side terminals 12, and connected to the standing wall 88; and the slits 90a, 90b, 90c, 90d, 90e, which are formed spanning the standing wall 88 and the front-side flat wall 84 and respectively receive the device-side terminals 8, 18 in the interior of the outer case 24. The plurality of battery-side terminals 12 includes: the battery-side, positive-electrode terminals 56f, 56s and the battery-side, negative-electrode terminals 58f, 58s for discharging (conducting current) from the battery cells 32 to the electric work machine 16 or charging (conducting current) from the charger 6 to the battery cells 32; the battery-side, discharging-signal terminal 60 for signal communication (conducting electric signals) between the electric work machine 16 and the circuit board 36; and the battery-side, charging-signal terminals 62f, 62s for signal communication (conducting electric signals) between the charger 6 and the circuit board 36. The battery-side, positive-electrode terminals 56f, 56s, the battery-side, negative-electrode terminals 58f, 58s, the battery-side, discharging-signal terminal 60, and the battery-side, charging-signal terminals 62f, 62s are disposed spaced apart from each other in third direction D3, which is orthogonal to both first direction D1 and second direction D2. The plurality of slits 90a, 90b, 90c, 90d, 90e includes: the slit 90a, which receives the device-side, positive-electrode terminals 256, 356; the slit 90e, which receives the device-side, negative-electrode terminals 258, 358; the slit 90b, which receives the device-side, discharging-signal terminal 360; and the slits 90c, 90d, which respectively receive the device-side, charging-signal terminals 262f, 262s. The outer case 24 further has the mating recessed portion 116b (example of a "recessed portion" according to the present teachings), which is formed by recessing the front-side flat wall 84 around the slit 90b.

According to the above-described configuration, even if the device on which the battery pack 4 is to be mounted (i.e., the electric work machine 16 or the charger 6) has the protruding portion at a location corresponding to the slit 90b of the battery pack 4, that protruding portion is received by the mating recessed portion 116b of the battery pack 4. Consequently, it is possible to avoid interference of the protruding portion with the battery pack 4. Furthermore, in the state in which the protruding portion has been received in the mating recessed portion 116b, at least a portion of the slit 90b is blocked off by the protruding portion. The ingress of foreign matter (e.g., dust) into the interior of the outer case 24 via the slit 90b is thereby impeded and curtailed.

In an additional aspect of the battery pack 4 of the present working example, the battery pack 4 is again mountable on the electric work machine 16 or the charger 6, which has the terminal-mounting surface 10, 20 from which the sheet-shaped, device-side terminals 8, 18 protrude, by sliding the battery pack 4 in first direction D1 parallel to the terminal-mounting surface 10, 20. The battery pack 4 comprises: the battery cells 32; the battery-side terminals 12, which electrically connect to the device-side terminals 8, 18 by pinching the device-side terminals 8, 18 in a direction orthogonal to first direction D1; the circuit board 36, which is electrically connected to both the battery cells 32 and the plurality of battery-side terminals 12; and the outer case 24, which houses the battery cells 32, the circuit board 36, and the plurality of battery-side terminals 12. The outer case 24 has the slits 90a, 90b, 90c, 90d, 90e, which are formed in the outer surface of the outer case 24 and respectively receive the device-side terminals 8, 18 in the interior of the outer case 24. Assuming that a direction that is orthogonal to first direction D1 and is the direction from the battery pack 4 toward the terminal-mounting surface 10, 20 is defined as second direction D2, the plurality of battery-side terminals 12 includes: the battery-side, positive-electrode terminals 56f, 56s (examples of a "first terminal" according to the present teachings) disposed along first virtual axis A1, which is parallel to first direction D1; the battery-side, discharging-signal terminal 60 (example of a "second terminal" according to the present teachings) disposed along second virtual axis A2, which is parallel to first direction D1 and is offset by first distance d1 relative to first virtual axis A1 in third direction D3, which is orthogonal to both first direction D1 and second direction D2; the battery-side, charging-signal terminal 62f (example of a "third terminal" according to the present teachings) disposed along third virtual axis A3, which is parallel to first direction D1 and offset from second virtual axis A2 by second distance d2 in third direction D3; the battery-side, charging-signal terminal 62s (example of a "fourth terminal" according to the present teachings) disposed along fourth virtual axis A4, which is parallel to first direction D1 and offset from third virtual axis A3 by third distance d3 in third direction D3; and the battery-side, negative-electrode terminals 58f, 58s (examples of a "fifth terminal" according to the present teachings) disposed along fifth virtual axis A5, which is parallel to first direction D1 and offset from fourth virtual axis A4 by fourth distance d4 in third direction D3. First distance d1, third distance d3, and fourth distance d4 are equal to each other, or are at least substantially equal (within 5% of each other). Second distance d2 is greater than each of first distance d1, third distance d3, and fourth distance d4.

In previously existing battery packs 4, a plurality of battery-side terminals 12 were disposed equispaced from each other in third direction D3. On the other hand, according to the above-mentioned configuration, second distance d2 (i.e., the spacing between the battery-side, discharging-signal terminal 60 and the battery-side, charging-signal terminal 62f) is greater than each of first distance d1, third distance d3, and fourth distance d4 (i.e., the spacings between the other terminals). It is thereby possible to form a larger space between the battery-side, discharging-signal terminal 60 and the battery-side, charging-signal terminal 62f. As a result, it is possible, for example, to dispose a large electrical component or dispose multiple electrical components in this space, whereby the battery pack 4 can be designed to be more compact.

In one or more embodiments, second distance d2 is equal to or greater than two times each of first distance d1, third distance d3, and fourth distance d4.

According to the above-mentioned configuration, a larger space can be formed between the battery-side, discharging-signal terminal 60 and the battery-side, charging-signal terminal 62f. Thus, it is possible, for example, to dispose a large electrical component or dispose multiple electrical components in this space.

In one or more embodiments, the battery-side, positive-electrode terminals 56f, 56s function as the battery-side, positive-electrode terminals 56f, 56s for discharging (conducting current) from the battery cells 32 to the electric work machine 16 or charging from the charger 6 to the battery cells 32. The battery-side, discharging-signal terminal 60 functions as the battery-side, discharging-signal terminal 60 for signal communication (conducting electric signals) between the electric work machine 16 and the circuit board 36. The battery-side, charging-signal terminal 62f and the battery-side, charging-signal terminal 62s function as the battery-side, charging-signal terminals 62f, 62s for signal communication (conducting electric signals) between the charger 6 and the circuit board 36. The battery-side, negative-electrode terminals 58f, 58s function as the battery-side, negative-electrode terminals 58f, 58s for discharging (conducting current) from the battery cells 32 to the electric work machine 16 or charging (conducting current) from the charger 6 to the battery cells 32.

According to the above-mentioned configuration, because the space between the battery-side, discharging-signal terminal 60 and the battery-side, charging-signal terminals 62f, 62s becomes larger, it becomes easier for the user to visually distinguish the battery-side, discharging-signal terminal 60 and the battery-side, charging-signal terminals 62f, 62s.

## Claims

1. A battery pack (4) that is mountable on an electronic device (16) or a charger (6), which each have a terminal-mounting surface (10; 20) from which sheet-shaped, device-side terminals (8) protrude, by sliding the battery pack in a first direction (D1) that is parallel to the terminal-mounting surface, the battery pack comprising:
one or more battery cells (32);
a plurality of battery-side terminals (12), which are adapted to respectively electrically connect to the device-side terminals by pinching the device-side terminals in a direction orthogonal to the first direction;
a circuit board (36) electrically connected to both the battery cell(s) and the plurality of battery-side terminals; and
an outer case (24), which houses the battery cell(s), the circuit board, and the plurality of battery-side terminals;
wherein:
assuming that a direction that is orthogonal to the first direction and is the direction from the battery pack toward the terminal-mounting surface of the electronic device or charger when the battery pack is mounted thereon is defined as a second direction (D2),
the outer case comprises:
a first wall (88) that is disposed in the first direction relative to the plurality of battery-side terminals;
a second wall (84) that is disposed in the second direction relative to the plurality of battery-side terminals, and connects to the first wall; and
a plurality of slits (90a, 90b, 90c, 90d, 90e), which pass through portions of the first wall and the second wall and are adapted to respectively receive the device-side terminals in the interior of the outer case;
the first wall has:
first flat-wall portions (92), in or between which is formed a first slit group that includes at least a first one of the plurality of slits; and
second flat-wall portions (96), which are adjacent to the first flat-wall portions in a third direction (D3) that is orthogonal to both the first direction and the second direction and in or between which is formed a second slit group that includes at least a second one of the plurality of slits; and
the second flat-wall portions are offset from the first flat-wall portions in a fourth direction (D4) that is opposite the first direction.

2. The battery pack according to claim 1, wherein:
the plurality of battery-side terminals (12) includes:
a positive-electrode terminal (56f, 56s) and a negative-electrode terminal (58f, 58s), which are adapted to conduct current from the battery cell(s) (32) to the electronic device (16) and to conduct current from the charger (6) to the battery cell(s);
a discharging-signal terminal (60) adapted to conduct electric signals between the electronic device and the circuit board (36); and
a first charging-signal terminal (62f) adapted to conduct electric signals between the charger and the circuit board;
wherein:
the positive-electrode terminal, the negative-electrode terminal, the discharging-signal terminal, and the first charging-signal terminal are disposed spaced apart from each other in the third direction (D3); and
the plurality of slits includes:
a positive-electrode slit (90a), which is adapted to receive the device-side terminal corresponding to the positive-electrode terminal of the battery pack;
a negative-electrode slit (90e), which receives the device-side terminal corresponding to the negative-electrode terminal of the battery pack;
a discharging-signal slit (90b), which receives the device-side terminal corresponding to the discharging-signal terminal of the battery pack; and
a first charging-signal slit (90c), which receives the device-side terminal corresponding to the first charging-signal terminal of the battery pack.

3. The battery pack according to claim 2, wherein:
the first slit group includes at least one of the positive-electrode slit (90a), the negative-electrode slit (90e), and the discharging-signal slit (90b); and
the second slit group includes the first charging-signal slit (90c).

4. The battery pack according to claim 2 or 3, further comprising:
a second charging-signal terminal (62s) that is offset from the first charging-signal terminal (62f) in the third direction (D3); and
a second charging-signal slit (90d), which is adapted to receive the device-side terminal corresponding to the second charging-signal terminal of the battery pack.

5. The battery pack according to claim 4, wherein the location (A7) of the end of the first charging-signal terminal in the first direction (D1) and the location (A7) of the end of the second charging-signal terminal in the first direction are aligned with each other in the first direction.

6. The battery pack according to any one of preceding claims, wherein:
the plurality of battery-side terminals (12) includes:
a reference terminal (56s, 58s, 60) disposed in the fourth direction (D4) relative to the first flat-wall portions (92); and
an offset terminal (62f, 62s) disposed in the fourth direction relative to the second flat-wall portions (96); and
the location (A7) of the end of the offset terminal in the first direction (D1) is offset in the fourth direction relative to the location (A6) of the end of the reference terminal in the first direction.

7. The battery pack according to claim 6, wherein:
the reference terminal is any one of:
a (the) positive-electrode terminal (56s) adapted to conduct current from the battery cell(s) (32) to the electronic device (16) and from the charger (6) to the battery cell(s);
a (the) negative-electrode terminal (58s) adapted to conduct current from the battery cell(s) to the electronic device and from the charger to the battery cell(s); and
a (the) discharging-signal terminal (60) adapted to conduct electric signals between the electronic device and the circuit board (36); and
the offset terminal is adapted to function as a(the) charging-signal terminal (62f, 62s) that conducts electric signals between the charger and the circuit board.

8. The battery pack according to any preceding claim, wherein:
the plurality of battery-side terminals (12) include:
a (the) positive-electrode terminal (56f, 56s) and a (the) negative-electrode terminal (58f, 58s) adapted to conduct current between the battery cell(s) (32) and the electronic device (16) and between the charger (6) and the battery cells;
a (the) discharging-signal terminal (60) adapted to conduct electric signals between the electronic device and the circuit board (36); and
one or more charging-signal terminals (62f, 62s) adapted to conduct electric signals between the charger and the circuit board;
the positive-electrode terminal, the negative-electrode terminal, the discharging-signal terminal, and the charging-signal terminal(s) are disposed spaced apart from each other in the third direction (D3);
the location (A6) of the end of the positive-electrode terminal in the first direction and the location (A6) of the end of the negative-electrode terminal in the first direction are aligned with each other in the first direction; and
at least one of the location of the end of the discharging-signal terminal in the first direction and the location (A7) of the end of the charging-signal terminal(s) in the first direction is (are) offset in the fourth direction (D4) relative to the location (A6) of the end of the positive-electrode terminal in the first direction and the location (A6) of the end of the negative-electrode terminal in the first direction.

9. The battery pack according to claim 8, wherein:
the location (A6) of the end of the positive-electrode terminal (56s) in the first direction (D1), the location (A6) of the end of the negative-electrode terminal (58s) in the first direction, and the location (A6) of the end of the discharging-signal terminal (60) in the first direction are aligned with each other in the first direction; and
the location (A7) of the end of the charging-signal terminal(s) (62f, 62s) in the first direction is offset in the fourth direction (D4) relative to each of the location (A6) of the end of the positive-electrode terminal in the first direction, the location (A6) of the end of the negative-electrode terminal in the first direction, and the location (A6) of the end of the discharging-signal terminal in the first direction.

10. The battery pack according to any one of the preceding claims, wherein:
the plurality of battery-side terminals (12) include:
a first terminal (56f, 56s) disposed along a first virtual axis (A1) parallel to the first direction (D1);
a second terminal (60) disposed along a second virtual axis (A2), which is parallel to the first direction and offset by a first distance (d1) from the first virtual axis in the third direction (D3);
a third terminal (62f) disposed along a third virtual axis (A3), which is parallel to the first direction and offset by a second distance (d2) from the second virtual axis in the third direction;
a fourth terminal (62s) disposed along a fourth virtual axis (A4), which is parallel to the first direction and offset by a third distance (d3) from the third virtual axis in the third direction; and
a fifth terminal (58f, 58s) disposed along a fifth virtual axis (A5), which is parallel to the first direction and is offset by a fourth distance (d4) from the fourth virtual axis in the third direction;
the first distance, the third distance, and the fourth distance are equal to each other;
and
the second distance is greater than each of the first distance, the third distance, and the fourth distance.

11. The battery pack according to claim 10, wherein the second distance (d2) is equal to or greater than two times each of the first distance (d1), the third distance (d3), and the fourth distance (d4).

12. The battery pack according to claim 10 or 11, wherein:
the first terminal (56f, 56s) is a (the) positive-electrode terminal adapted to conduct current from the battery cell(s) (32) to the electronic device (16) and to conduct current from the charger (6) to the battery cell(s);
the second terminal (60) is a (the) discharging-signal terminal adapted to conduct electric signals between the electronic device and the circuit board (36);
the third terminal (62f) is a (the) first charging-signal terminal adapted to conduct electric signals between the charger and the circuit board;
the fourth terminal (62s) is a (the) second charging-signal terminal adapted to conduct electric signals between the charger and the circuit board; and
the fifth terminal (58f, 58s) is a (the) negative-electrode terminal adapted to conduct current from the battery cell(s) to the electronic device and to conduct current from the charger to the battery cell(s).

13. The battery pack according to any one of claims 10-12, wherein:
the location (A7) of the end of the third and fourth terminals (62f, 62s) in the first direction (D1) is offset in the fourth direction (D4) relative to the location (A6) of the end of the first, second and fifth terminals (56s, 60, 58s) in the first direction.
